(19) Europäisches Patentamt
European Patent Office
Office européen des brevets

(11) Veröffentlichungsnummer: **0 560 137 A1**

# (12) EUROPÄISCHE PATENTANMELDUNG

(21) Anmeldenummer: **93102967.2**

(22) Anmeldetag: **25.02.93**

(51) Int. Cl.[5]: **C07F 3/10**, C07F 3/12, C07F 3/14, G01N 27/00, G01N 31/00

(30) Priorität: **12.03.92 CH 800/92**

(43) Veröffentlichungstag der Anmeldung: **15.09.93 Patentblatt 93/37**

(84) Benannte Vertragsstaaten: **AT BE CH DE DK ES FR GB IT LI LU NL SE**

(71) Anmelder: **Firma Willi Möller**
**Gubelstrasse 37**
**CH-8050 Zürich(CH)**

(72) Erfinder: **Wilhelm, Simon, Prof.,Dr.**
**Hadlaubstrasse 63**
**CH-8006 Zürich(CH)**
Erfinder: **Rothmaier Markus**
**Kaspar-Kopp Strasse 9**
**CH-6030 Ebikon(CH)**

(74) Vertreter: **Blum, Rudolf Emil Ernst et al**
**c/o E. Blum & Co Patentanwälte Vorderberg 11**
**CH-8044 Zürich (CH)**

## (54) Quecksilber enthaltende Komplexbildner anionen aus der Gruppe der Halogenide und Pseudohalogenide; neue Quecksilber enthaltende Verbindungen und Vorrichtungen zur Bestimmung von Halogeniden und Pseudohalogeniden in wässrigen Medien.

(57) Quecksilber enthaltende Komplexbildner für Anionen, welche in ihrem Molekül mindestens zwei Quecksilberatome enthalten, weisen eine gute Selektivität für Halogenide (ausgenommen Fluorid) und Pseudohalogenide gegenüber anderen Anionen, wie Bicarbonat, Hydrogenphosphat und Acetat auf.

Bevorzugte entsprechende Komplexbildner enthalten pro Molekül entweder 2 oder 3 oder 4 oder 6 Quecksilberatome, und die Verbindungen mit 4 oder 6 Quecksilberatomen sind vorzugsweise cyclisch.

Die entsprechenden Quecksilberverbindungen die aufgrund mindestens eines langkettigen aliphatischen Restes pro Molekül lipophile Eigenschaften besitzen, sind neue chemische Verbindungen. Anionselektive Membranen, welche die fraglichen Quecksilberverbindungen als Sensoren für Halogenide und Pseudohalogenide enthalten, sind zur Bestimmung der Anionen in wässrigen Medien geeignet, beispielsweise in biologischem Material, wie Körperflüssigkeiten.

EP 0 560 137 A1

## HINTERGRUND DER ERFINDUNG

Für eine grosse Anzahl an Kationen, wie zum Beispiel Alkalimetall und Erdalkalimetallionen, stehen eine Anzahl von selektiven Komplexbildnern zur Verfügung, mit deren Hilfe entsprechende kationselektive Vorrichtungen hergestellt werden können, die zur Bestimmung der fraglichen Kationen in wässrigen Medien, einschliesslich biologischen Flüssigkeiten, geeignet sind.

Ferner sind auch für einige Anionen, beispielsweise für Carbonatanionen, bereits Komplexbildner gefunden worden, welche eine ausreichende Selektivität für die fraglichen Anionen besitzen, sodass mit deren Hilfe Vorrichtungen zur qualitativen oder quantitativen Bestimmung der Anionen ermittelt werden konnten.

Im Gegensatz dazu standen bisher für Halogenidanionen noch keine ausreichend selektiven Komplexbildner zur Verfügung, welche die Entwicklung von Vorrichtungen zur Bestimmung der Halogenidanionen in wässrigen Medien, beispielsweise biologische Flüssigkeiten, ermöglichten.

## BESCHREIBUNG DES STANDES DER TECHNIK

Als Sensor für Chloridionen ist im Handel eine Porphyrinverbindung mit einem dreiwertigen Mangan als Zentralatom erhältlich, nämlich das 5,10,15,20-Tetraphenyl-21H,23H-porphin-mangan(III)chlorid [Mn(III) TPPC1]. Diese Verbindung weist jedoch eine um etwa drei Zehnerpotenzen höhere Selektivität für Salicylatanionen als für Chloridionen auf, was insbesondere bei Anwendungen im klinischen Bereich überaus störend ist, und sie besitzt ferner auch eine nur ungenügende Selektivität für Chloridionen im Vergleich zu Acetatanionen und Bicarbonatanionen.

Des weiteren werden in der Veröffentlichung von M. Huser, W.E. Morf, K. Fluri, K. Seiler, P. Schulthess und W. Simon in Helvetica Chimica Acta Bd. 73, Nr. 5, 1990, Seiten 1481 - 1496, metallorganische Verbindungen des Kobalts, sowie Metalloporphyrin-Komplexe der Metalle Mangan und Ruthenium und Zinn beschrieben, die eine Selektivität für verschiedene Anionen, einschliesslich der Anionen von Halogeniden und des Rhodanides aufweisen.

In der PCT/CH/00030 Anmeldung von W. Simon, die bereits am 6. September 1979 unter der internationalen Veröffentlichungs-Nr. WO 79/00661 publiziert wurde, wurde schon festgestellt, dass solche Zinnverbindungen, bei denen 2, 3 oder 4 organische Reste, insbesondere Kohlenwasserstoffreste, an das Zinnatom gebunden sind, in Membranen als gegenüber Bicarbonat selektiver Komponente eingesetzt werden können. In den letzten Jahren wurden jedoch auch Komplexbildner für Halogenide auf Basis von Trialkylzinnchlorid entwickelt. Obwohl die Selektivität dieser Verbindungen gegenüber Chlorid im Vergleich zu anderen Anionen relativ gut ist, war die Verwendung dieser Zinnverbindungen in entsprechenden Elektroden zur potentiometrischen Bestimmung von Chlorid in wässrigem Medium bisher nicht möglich, weil die entsprechenden Elektroden stark driftende Potentiale und lange Ansprechzeiten aufweisen.

Es ist ferner bekannt, dass bestimmte organische Quecksilberverbindungen die Fähigkeit besitzen, mit bestimmten organischen Verbindungen Komplexe zu bilden. So ist beispielsweise bekannt, dass diejenige Quecksilberverbindung der Formel A

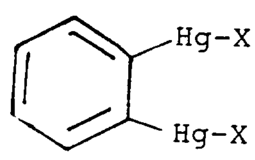

A

in welcher beide X für Chloratome stehen, in der Lage ist, mit Dimethylformamid einen 1:1 Komplex zu bilden, während die gleiche Quecksilberverbindung mit dem Tetraphenylphosphonium-chlorid einen 2:1 Komplex aus zwei Molen der 1,2-Phenylenquecksilberverbindung und einem Mol der Phosphorverbindung bildet (siehe die Veröffentlichung von A.L. Beauchamp, M.J. Olivier, J.D. Wuest und B. Zacharie in Organometallics, 1987, Band 6, Seiten 153-156). Die Quecksilberverbindungen der Formel A, in welchen beide X für Chlor stehen, sind jedoch auch in der Lage, 2:1 Komplexe mit Chlorid zu bilden, in welchen das Chloridion von den vier Quecksilberatomen der zwei Moleküle der Verbindung der Formel A umgeben ist (siehe die Veröffentlichung von J.D. Wuest und B. Zacharie in Stud. Org. Chem. (Amsterdam), Bd. 31, 1987, Seiten 501 - 510, beziehungsweise das Abstract dieser Veröffentlichung in Chemical Abstracts, Vol. 109, 1988, Columbus, Ohio, US, Abstract No. 73557r, Seite 705).

In dieser zuletzt genannten Veröffentlichung werden jedoch auch solche Quecksilberverbindungen der Formel A beschrieben, in welchen die beiden Reste X für Bromatome oder Jodatome stehen und es

werden ferner auch solche Quecksilberverbindungen der Formel A beschrieben, in welchen beide Gruppen X entweder für Reste der Formel

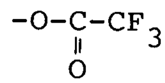

oder für Reste der Formel

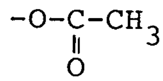

stehen. Die entsprechenden Verbindungen, in denen die beiden Gruppen X für Acylreste der Trifluoressigsäure stehen, sind ferner auch in der Veröffentlichung von S. Deguire und L. Beauchamp, in Acta Cryst. (1990) C.46, 27-29, beschrieben.

Des weiteren wurde in den beiden genannten Veröffentlichungen festgestellt, dass die entsprechenden Quecksilberverbindungen mit zwei Trifluoracetylgruppen und ebenfalls die entsprechenden Dichlorverbindungen der Formel A in der Lage sind, mit Dimethylformamid, sowie mit bestimmten Thioketonen 1:1 Komplexe zu bilden.

Diejenigen Verbindungen der Formel A, in welchen beide Reste X für Brom oder Jod stehen, sind ebenfalls in der Lage, mit Tetraphenylphosphoniumchlorid Komplexe zu bilden (siehe die Veröffentlichung von A.L. Beauchamp, M.J. Olivier, J.D. Wuest und B. Zacharie in J. Am. Chem. Soc. 1986, 108, 73-77).

In der Veröffentlichung von Deacon, G.B. et al. in & Austr. J. Chem., Bd. 30, Nr. 8, 1977, Seiten 1701 - 1713 (siehe auch Chemical Abstracts, Vol. 87, 1977, Columbus, Ohio, US, Abstract No. 200955y, Seite 678), wird die Herstellung von permerkurierten aromatischen Verbindungen beschrieben, in welchen an den Benzolkern fünf oder allenfalls sechs Reste der Formel

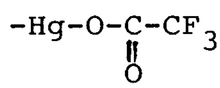

gebunden sind und an den Benzolkern allenfalls ein weiterer Rest R in der Bedeutung von Nitro, Halogen, Methoxy, Methyl, Trifluoromethyl oder COOH gebunden ist. Die entsprechenden Verbindungen, in welchen R Brom ist und fünf Quecksilber enthaltende Reste der oben angegebenen Formel an den Benzolkern gebunden sind, werden durch eine direkte Permerkurierung hergestellt, indem man Brombenzol mit dem Quecksilbersalz der Perfluoressigsäure der Formel

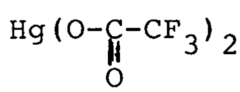

umsetzt.

Wenn man die dort beschriebenen pro Molekül fünf Quecksilberatome enthaltenden Verbindungen mit Trijodidionen der Formel

$J_3^-$

(beispielsweise Jod in wässrigem Natriumjodid) umsetzt, dann erhält man quecksilberfreie Produkte, in welchen an den Benzolkern statt der fünf quecksilberhaltigen Reste, insgesamt fünf Jodatome gebunden sind. Es wurde also nicht beobachtet, dass die pro Molekül fünf oder sechs Quecksilberatome aufweisenden Verbindungen irgendein Komplexbildungsvermögen gegenüber Jodid aufweisen.

In der bereits erwähnten Veröffentlichung von J.D. Wuest und B. Zacharie in Stud. Org. Chem. (Amsterdam), Bd. 31, 1987, Seiten 501 - 510, werden ferner aromatische quecksilberenthaltende Verbindungen beschrieben, die pro Molekül drei Quecksilberatome aufweisen und die folgende Struktur B

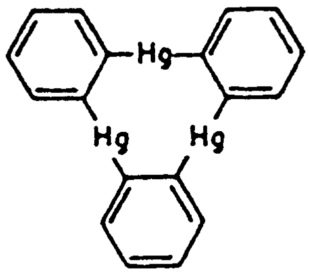

B

besitzen. Bei Umsetzung dieser pro Molekül drei Quecksilberatome enthaltenden Verbindungen mit Quecksilber-II-halogeniden, bilden sich keine Komplexe des Halogenidions, sondern es ergeben sich solche Verbindungen der weiter vorne angegebenen Formel A, bei denen die beiden an die Quecksilberatome gebundenen Reste X Halogenatome bedeuten (siehe Seite 502 der Veröffentlichung).

In dieser Veröffentlichung und auch in der Veröffentlichung von J.D. Wuest und B. Zacharie im J. Am. Chem. Soc. 1987, 109, Seiten 4714-4715, wird ferner die Herstellung einer macrocyclischen Verbindung mit insgesamt vier Quecksilberatomen pro Molekül beschrieben, welche die folgende Formel C

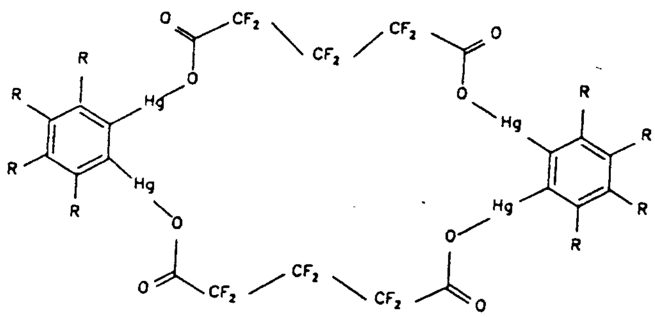

C

aufweist. In dieser Verbindung sind sämtliche Reste R Wasserstoffatome. Dieser Macrocyclus der Formel C wurde hergestellt, indem man die 1,2-Phenylendiquecksilberverbindung der weiter oben angegebenen Formel A, in welcher beide X Chlor waren, zunächst mit wässriger Natronlauge zu einem polymeren Oxyd umsetzte und dieses dann in Tetrahydrofuran mit Perfluorglutarsäure reagieren liess, wobei sich der Tetrahydrofurankomplex des oben angegebenen Macrocyclus in guter Ausbeute bildete. Der entsprechende Komplex war ein Komplex aus zwei Molen Tetrahydrofuran und einem Mol des Macrocyclus, wobei der Macrocyclus eine nahezu planare Struktur aufwies und ein Tetrahydrofuranmolekül oberhalb und eines unterhalb der Ebene des macrocyclischen Ringes gebunden war. Auch entsprechende fluorfreie Macrocyclen, die in der cyclischen Struktur statt in beiden Gruppierungen der Formeln

$-(CF_2)_3-$

Gruppen der Formeln

$-(CH_2)_n-$

aufwiesen, sind dort beschrieben. Die entsprechenden Verbindungen weisen jedoch eine sehr schlechte Löslichkeit in Tetrahydrofuran, Essigsäurenitril und Dimethylsulfoxyd auf.

In der Veröffentlichung von Francois Nadeau, Michel Simard und James D. Wuest in Organometallics 1990, 9, Seiten 1311-1314 (siehe auch Chemical Abstracts, Vol. 112, 1990, Columbus, Ohio, US; Seite 796, Abstract No. 179284b), wurde ferner festgestellt, dass der vier Quecksilberatome enthaltende Macrocyclus der oben angegebenen Formel C und entsprechende Verbindungen, in denen sämtliche Reste R Methylgruppen sind, in der Lage sind, mit 1,2-Dimethoxyäthan Komplexe aus einem Mol des Macrocyclus und vier Mol des Dimethoxyäthan zu bilden.

In der Veröffentlichung von Yagupol'skii, L.m. et al. in Chemical Abstracts, Vol. 85, 1976, Columbus, Ohio, U.S., Abstract No. 46115z, Seite 486, und auch in der Veröffentlichung von Deacon, G.B. et al. in Chemical Abstracts, Vol. 84, 1976, Columbus, Ohio, US, Abstract No. 150721j, Seite 559, werden

entsprechende permerkurierte aromatische Verbindungen beschrieben, in welchen an den Benzolkern fünf Reste der Formel

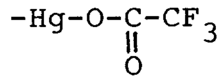

gebunden sind, wobei das sechste Kohlenstoffatom des Benzolkernes unsubstituiert ist oder mit Carbonsäuregruppen, Carbonsäureamidgruppen oder Nitrogruppen substituiert ist. Auch diese Autoren stellten fest, dass bei Umsetzung mit verschiedenen Verbindungen, beispielsweise Trijodidionen, eine Substitution der genannten Quecksilber enthaltenden Reste gegen andere Reste auftritt.

Bei den Untersuchungen, die durchgeführt wurden um gegenüber Anionen aus der Gruppe der Halogenide und Pseudohalogenide selektive Komplexbildner zu entwickeln, hat es sich überraschenderweise herausgestellt, dass solche Verbindungen, die pro Molekül mindestens zwei Quecksilberatome enthalten, die gewünschten Eigenschaften aufweisen, wobei zu den entsprechenden Quecksilber enthaltenden Komplexbildnern sowohl solche gehören, die bereits in der Literatur beschrieben sind, als auch entsprechende neue chemische Verbindungen. Insbesondere hat es sich gezeigt, dass diejenigen entsprechenden neuen Quecksilber enthaltenden Verbindungen, die in ihrem Molekül mindestens eine langkettige Alkylgruppe aufweisen und somit entsprechend lipophile Eigenschaften besitzen, zur Herstellung von Sensoren auf Basis eines Trägermaterials, wie zum Beispiel Polyvinylchlorid und der Quecksilber enthaltenden Verbindung geeignet sind, die eine hohe Selektivität für Halogenidanionen, insbesondere Chlorid, Bromid und Jodid, gegenüber anderen Anionen aufweisen.

## BESCHREIBUNG DER ERFINDUNG

Ein Gegenstand der vorliegenden Erfindung sind daher Quecksilber enthaltende Komplexbildner für Anionen, die dadurch gekennzeichnet sind, dass diese Komplexbildner eine Selektivität für Anionen aus der Gruppe der Halogenide und Pseudohalogenide aufweisen, und dass diese Komplexbildner pro Molekül mindestens zwei Quecksilberatome enthalten und der folgenden Formel I

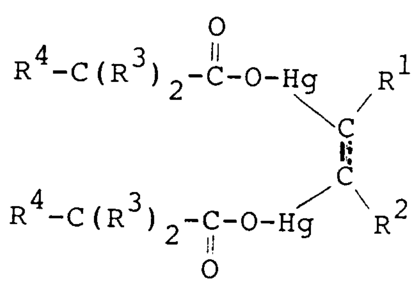

entsprechen, in welcher

- $R^1$ und $R^2$ unabhängig voneinander Wasserstoffatome, aliphatische, cycloaliphatische oder aromatische Reste darstellen oder
- $R^1$ und $R^2$ gemeinsam mit den beiden Kohlenstoffatomen, an welche sie gebunden sind, einen cycloaliphatischen, aromatischen oder heteroaromatischen einkernigen oder mehrkernigen Rest darstellen,
- $R^3$ unabhängig voneinander für Wasserstoffatome, Fluoratome, Chloratome, Bromatome oder Methylgruppen stehen,
- $R^4$ unabhängig voneinander für Wasserstoffatome, Fluoratome, Chloratome, Bromatome, Alkylreste, Halogenalkylreste, cycloaliphatische Reste oder aromatische Reste stehen oder die beiden Reste $R^4$ gemeinsam eine Gruppierung darstellen, welche die Verbindungen der Formel I zu einer cyclischen Struktur ringschliessen, wobei diese zweiwertige ringschliessende Gruppierung vorzugsweise weitere Quecksilberatome enthält und
- ⸗ anzeigt, dass zwischen den beiden Kohlenstoffatomen eine Einfach- oder Doppelbindung vorhanden ist und wobei ferner dann, wenn die beiden Kohlenstoffatome miteinander durch eine Einfachbindung verbunden sind, an diese beiden Kohlenstoffatome je ein weiterer Substituent gebunden ist, der aus der Gruppe Wasserstoff, Halogenatome oder Alkyl, Cycloalkyl oder Arylreste ausgewählt ist,

sowie Halogenkomplexe und Pseudohalogenkomplexe der Verbindungen der Formel I.

Bevorzugte Komplexbildner der Formel I, die eine nicht cyclische Struktur aufweisen und pro Molekül nur zwei Quecksilberatome enthalten, sind die Verbindungen der folgenden Formel Ia

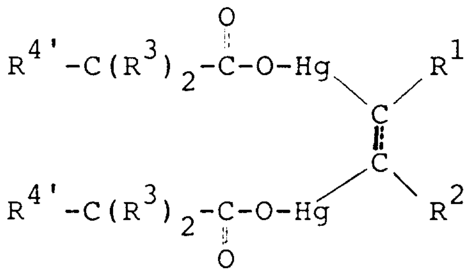

Ia

in welcher die beiden Reste $R^{4'}$ unabhängig voneinander für Wasserstoffatome, Fluoratome, Chloratome, Alkylreste, Halogenalkylreste, vorzugsweise perhalogenierte Alkylreste, cycloaliphatische Reste oder aromatische Reste stehen und

$R^1$, $R^2$ und $R^3$ die gleiche Bedeutung aufweisen wie in der Formel I,

sowie die entsprechenden Halogenkomplexe und Pseudohalogenkomplexe der Verbindungen der Formel Ia. Speziell bevorzugt sind diese Komplexbildner der Formel Ia entsprechende neue Komplexbildner der Formel Ia, die in ihrem Molekül mindestens eine langkettige Alkylgruppe mit 5 bis 20 Kohlenstoffatomen, insbesondere 7 bis 15 Kohlenstoffatomen aufweisen, wobei diese mindestens eine langkettige Alkylgruppe an das Molekül direkt, über eine Aethergruppierung, eine Estergruppierung oder eine Säureamidgruppierung gebunden ist.

Eine bevorzugte Klasse an Verbindungen der Formel Ia sind diejenigen, in welchen sämtliche Reste $R^3$ Fluoratome sind und der Rest $R^{4'}$ ebenfalls ein Fluoratom oder perfluorierter Methyl-, Aethyl- oder n-Propylrest ist. In dieser bevorzugten Klasse an Komplexbildnern der Formel Ia ist vorzugsweise sowohl der Rest $R^1$ als auch der Rest $R^2$ ein derartiger langkettiger Alkylrest, der direkt oder über die erwähnten Gruppen an die beiden benachbarten Kohlenstoffatome gebunden ist, wobei ---- für eine Doppelbindung steht oder die Struktur der Formel

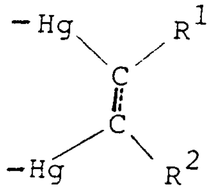

stellt eine Gruppierung der Formel

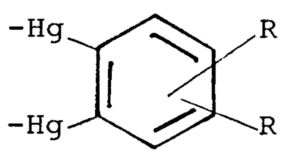

dar, in welcher zwei oder mehr langkettige Alkylreste R der genannten Art direkt oder über Aetherbindungen, Esterbindungen oder Säureamidbindungen an den Benzolkern gebunden sind, beispielsweise in den Nachbarstellungen zu den beiden Quecksilberatomen der angegebenen Struktur. Allenfalls kann die angegebene Struktur auch einen Cyclohexenring darstellen, bei dem sich die Doppelbindung zwischen den beiden Kohlenstoffatomen befindet, an welche die beiden Quecksilberatome gebunden sind, wobei auch hier zwei oder mehr langkettige Alkylgruppen in der angegebenen Weise an den Cyclohexenring gebunden sind um die entsprechenden hydrophilen Eigenschaften der Quecksilberverbindung zu erzielen.

Eine weitere bevorzugte Gruppe an Komplexbildnern der Formel I sind diejenigen, welche die folgende Formel Ib

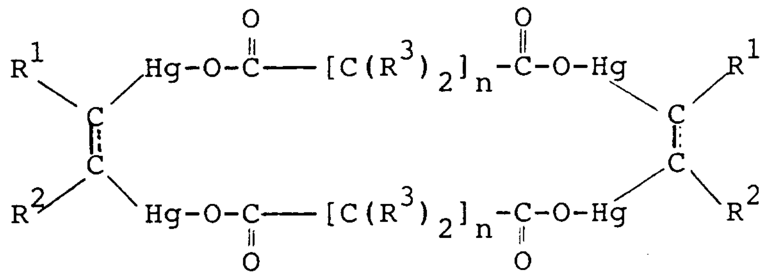

Ib

aufweisen, wobei in dieser Formel Ib die beiden Symbole n jeweils eine ganze Zahl im Bereich von 1 bis 7, vorzugsweise jeweils 3 oder 5, darstellen und
$R^1$, $R^2$, $R^3$ und die Symbole ⎓ die gleiche Bedeutung aufweisen wie in Formel I,

sowie die entsprechenden Halogenkomplexe und Pseudohalogenkomplexe der Verbindungen der Formel Ib.

Von diesen Komplexbildnern der Formel Ib sind wiederum diejenigen neuen Komplexbildner der Formel Ib speziell bevorzugt, die in ihrem Molekül mindestens eine langkettige Alkylgruppe mit 5 bis 20 Kohlenstoffatomen, insbesondere 7 bis 15 Kohlenstoffatomen aufweisen, wobei diese mindestens eine langkettige Alkylgruppe an das Grundgerüst der Verbindungen der Formel Ib direkt oder über eine Aethergruppierung, eine Estergruppierung oder eine Säureamidgruppierung gebunden ist.

In einer bevorzugten Klasse dieser neuen Komplexbildner der Formel Ib sind beide Reste $R^1$ und speziell bevorzugt ebenfalls beide Reste $R^2$ langkettige Alkylgruppen mit 5 bis 20 Kohlenstoffatomen, die direkt oder über eine Aethergruppierung, eine Estergruppierung oder eine Säureamidgruppierung an die entsprechenden Kohlenstoffatome gebunden sind, wobei in diesen speziell bevorzugten neuen Verbindungen der Formel Ib ferner das Symbol ⎓ eine Doppelbindung bedeutet.

Des weiteren sind bevorzugte neue Komplexbildner der oben angegebenen Formel Ib diejenigen, in welchen eine der beiden, und speziell bevorzugt, beide Gruppierungen der Struktur

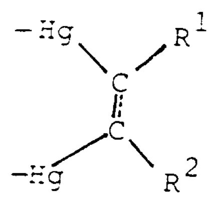

solche Gruppierungen sind, welche der Formel

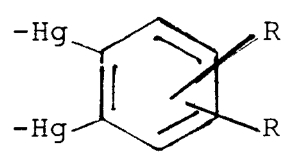

entsprechen, wobei pro Gruppierung der angegebenen Formel mindestens einer der beiden Reste R, vorzugsweise beide Reste R, und allenfalls noch weitere an den Benzolkern gebundene Reste R, langkettige Alkylgruppen darstellen, die 5 bis 20 Kohlenstoffatome aufweisen, insbesondere 7 bis 15 Kohlenstoffatome, wobei diese langkettigen Alkylgruppen an den entsprechenden Benzolkern direkt oder über eine Aethergruppierung oder eine Estergruppierung oder eine Säureamidgruppierung gebunden sind.

Beispielsweise können in den Gruppierungen der oben angegebenen Formel zwei Reste R an diejenigen Kohlenstoffatome des Benzolkernes gebunden sein, die sich in der Nachbarstellung zu den Quecksilberatomen befinden.

Allenfalls können die bevorzugten neuen Quecksilber enthaltenden Verbindungen der Formel Ib in ihrer Struktur auch statt der beiden Benzolkerne der angegebenen Struktur, zwei Cyclohexenringe aufweisen, wobei vorzugsweise die Quecksilberatome an diejenigen Kohlenstoffatome des Cyclohexenringes gebunden sind, zwischen denen sich die Doppelbindung befindet, und auch in diesem Falle weist jeder der beiden Cyclohexenringe vorzugsweise zwei langkettige Alkylreste R auf, die direkt oder über eine Aethergruppierung, eine Estergruppierung oder eine Säureamidgruppierung an den jeweiligen Cyclohexenring gebunden sind.

Eine weitere bevorzugte Gruppe an Komplexbildnern der Formel I, sind diejenigen, welche die folgende Formel Ic

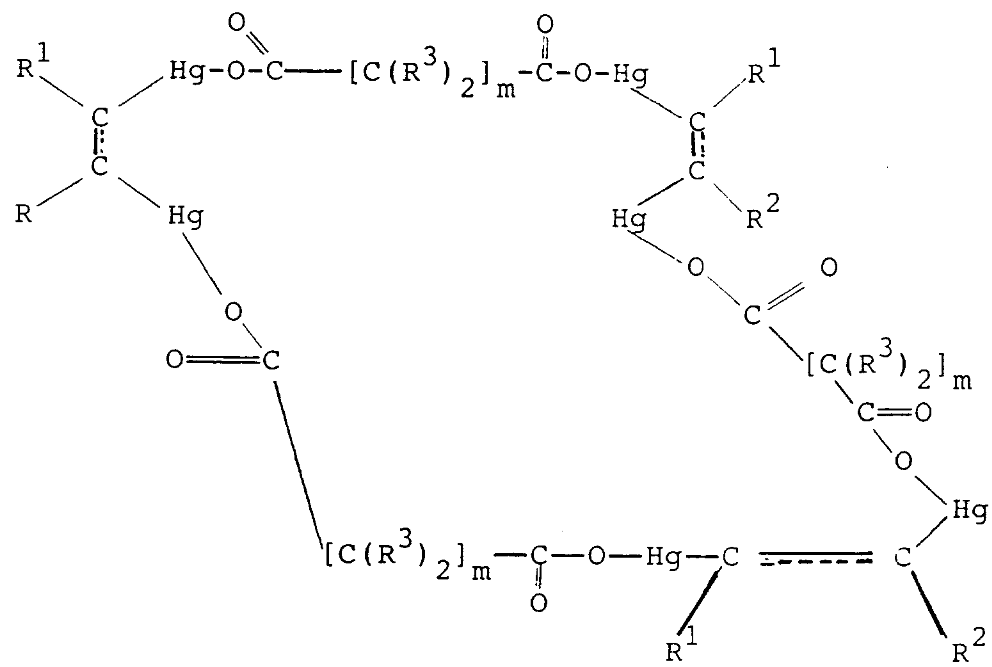

Ic

aufweisen,
wobei in dieser Formel Ic die Symbole m unabhängig voneinander für eine ganze Zahl im Bereich von 1 bis 7 stehen und $R^1$, $R^2$, $R^3$ und das Symbol $\overline{----}$ die gleiche Bedeutung aufweisen wie in Formel I, sowie ferner die entsprechenden Komplexe der Verbindungen der Formel Ic mit Halogenidanionen und Pseudohalogenidanionen.

Diejenigen Verbindungen der Formel Ic, in denen mindestens einer der Substituenten $R^3$ eine andere Bedeutung aufweist als diejenige eines Wasserstoffatoms und ferner diejenigen Verbindungen, in denen mindestens eine der drei Gruppen der Formel

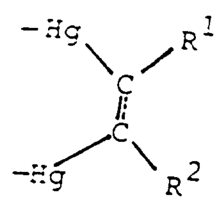

eine andere Bedeutung aufweist als diejenige eines unsubstituierten Benzolkernes, an welchen die beiden Quecksilberatome in Orthostellung zueinander gebunden sind, sind neue chemische Verbindungen.

Bevorzugte der neuen Komplexbildner der Formel Ic sind ferner diejenigen Verbindungen, in denen an die Struktur der Formel Ic mindestens eine langkettige Alkylgruppe mit 5 bis 20 Kohlenstoffatomen, insbesondere 7 bis 15 Kohlenstoffatomen, gebunden ist, wobei diese langkettige Alkylgruppe an das Grundgerüst der Verbindungen der Formel Ic direkt oder über eine Aethergruppierung, eine Estergruppierung oder eine Säureamidgruppierung gebunden ist.

In einer bevorzugten Klasse dieser neuen Komplexbildner der Formel Ic sind die drei Reste $R^1$ und speziell bevorzugt ebenfalls drei Reste $R^2$, langkettige Alkylgruppen mit 5 bis 20 Kohlenstoffatomen, die direkt oder über eine Aethergruppierung, eine Estergruppierung oder eine Säureamidgruppierung an die entsprechenden Kohlenstoffatome gebunden sind, wobei in diesen speziell bevorzugten neuen Verbindungen der Formel Ic ferner das Symbol $\overline{----}$ eine Doppelbindung bedeutet.

Auch in den Komplexbildnern der Formel Ic stellen vorzugsweise 1, 2 oder speziell bevorzugt alle 3 Strukturen der Formel

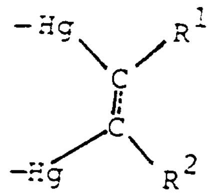

Gruppierungen der Formel

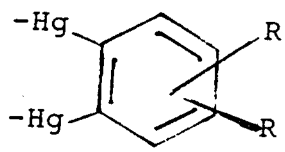

dar, wobei in diesen die Reste R die gleiche Bedeutung haben, wie in den analogen Strukturen, die im Zusammenhang mit den Verbindungen der Formel Ib genannt wurden und auch im vorliegenden Fall allenfalls statt der angeführten Benzolkerne entsprechende Cyclohexenringe vorliegen.

In bevorzugten Komplexbildnern der Formel I, beziehungsweise entsprechenden speziellen Komplexbildnern der Formeln Ia, Ib und Ic, sind ferner die in ihnen enthaltenden Reste $R^3$ Wasserstoffatome oder Fluoratome, und beispielsweise können in den entsprechenden Komplexbildnern sämtliche Reste $R^3$ Fluoratome sein.

In weiteren bevorzugten Komplexbildnern der Formel I, Ia, Ib und Ic stellen ferner sämtliche in ihnen enthaltene Gruppierungen der Formel

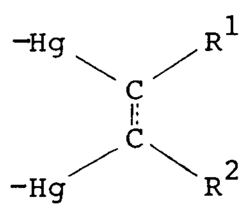

Arylreste der Formel

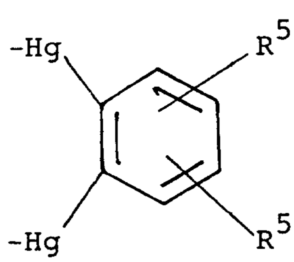

dar, wobei in jedem dieser Arylreste mindestens einer der beiden Reste $R^5$ eine Alkylgruppe mit 5 bis 20 Kohlenstoffatomen bedeutet, vorzugsweise eine geradkettige Alkylgruppe, wobei dieser Rest an den Benzolkern direkt, über ein Aethersauerstoffatom, eine Estergruppierung oder eine Säureamidgruppierung gebunden ist und der andere der beiden Reste $R^5$ die gleiche Bedeutung aufweist oder ein Wasserstoffatom, ein Halogenatom, einen Alkylrest mit 1 - 4 Kohlenstoffatomen oder eine Alkoxygruppe bedeutet oder

die beiden Reste $R^5$ gemeinsam einen ankondensierten aromatischen oder heteroaromatischen Rest darstellen.

Als spezielle Beispiele für neue Komplexbildner, die unter die vorher angegebene Formel Ia fallen, seien die Komplexbildner erwähnt, welche die folgende Formel II

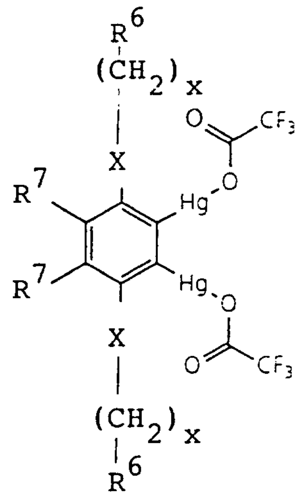

II

aufweisen und als spezielle Beispiele für neue Komplexbildner, die unter die weiter vorne angegebene Formel Ib fallen, seien die Komplexbildner der Formel III

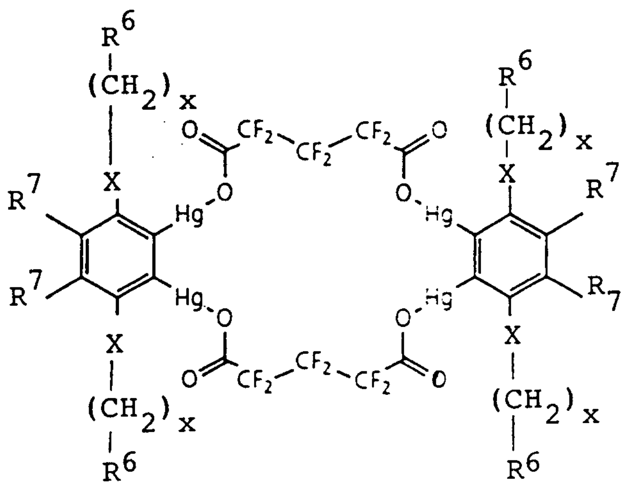

III

genannt. In diesen Komplexbildnern der Formel II und III stellen die Gruppen

-X- unabhängig voneinander eine Einfachbindung oder Gruppen der Formeln

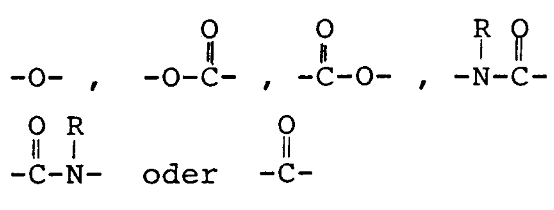

worin R Wasserstoff, Alkyl, Cycloalkyl oder Aryl ist,

dar,

die Symbole

x sind unabhängig voneinander ganze Zahlen im Bereich von 5 bis 20,

die Reste $R^6$ bedeuten unabhängig voneinander Wasserstoffatome, Cycloalkylgruppen oder Arylreste und

die Reste $R^7$ sind unabhängig voneinander Wasserstoffatome, Halogenatome, Alkylgruppen oder Alkoxygruppen.

Falls in den Verbindungen der Formel II, beziehungsweise III, in den Gruppierungen der Formel X, beziehungsweise in den Resten $R^6$, Arylgruppen, beziehungsweise Cycloalkylgruppen, vorhanden sind, dann sind diese Arylgruppen vorzugsweise Phenylreste, allenfalls auch Naphthylreste, und die Cycloalkylreste sind vorzugsweise Cyclohexylreste.

Es hat sich gezeigt, dass in den Halogenkomplexen der cyclischen Quecksilberverbindungen der Formeln I, Ib und Ic, sowie in den Halogenkomplexen der speziellen Verbindungen der Formel III, vorzugsweise pro Quecksilberatom ein Halogenatom in komplexierter Form enthalten ist. Ferner zeigte es sich, dass bei den zwei Quecksilberatome enthaltenden Komplexbildnern der Formel II je zwei derartige Verbindungen ein Halogenatom komplexieren, sodass das komplexierte Halogenatom von insgesamt 4 Quecksilberatomen umgeben ist. Die Halogenkomplexe der Komplexbildner der Formel III enthalten vorzugsweise insgesamt vier Halogenatome pro Molekül komplexiert, und in diesen liegen dann zwei der komplexierten Halogenatome oberhalb der Ringebene der beiden Benzolkerne, und zwei der komplexierten Halogenatome unterhalb der Ringebene der beiden Benzolkerne.

In jüngster Zeit wurde eine weitere Gruppe an Quecksilber enthaltenden Verbindungen synthetisiert, die pro Molekül 2 oder 3 Quecksilberatome aufweisen, die sich jedoch von den Quecksilber enthaltenden Verbindungen, der Formel I dahingehend unterscheiden, dass die Quecksilber enthaltenden Substituenten nicht an benachbarte Kohlenstoffatome gebunden sind, sondern bei denen sich zwischen den Kohlenstoffatomen, an welche die Quecksilber enthaltenden Substituenten gebunden sind, noch ein oder mehrere weitere Kohlenstoffatome befinden, die keine Quecksilber enthaltenden Substituenten tragen.

Bevorzugte derartige Quecksilber enthaltenden Verbindungen sind solche mit einem aromatischen Grundgerüst, an welches die beiden Quecksilber enthaltenden Reste oder die drei Quecksilber enthaltenden Reste nicht an benachbarte Kohlenstoffatome des aromatischen Kernes gebunden sind, sondern beispielsweise im Fall der entsprechenden zwei quecksilberhaltige Substituenten aufweisenden Verbindungen mit einem Benzolkern als aromatischem Grundgerüst in den Stellungen 1,3 bzw. in den Stellungen 1,4 und im Falle der entsprechenden Verbindungen mit drei Quecksilber enthaltenden Substituenten und einem Benzolkern als aromatischem Grundgerüst, in den Stellungen 1,3,5 desselben. Die entsprechenden Verbindungen weisen also die folgenden Grundstrukturen IV, V und VI auf.

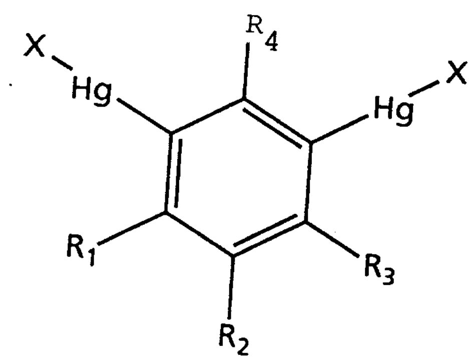

IV

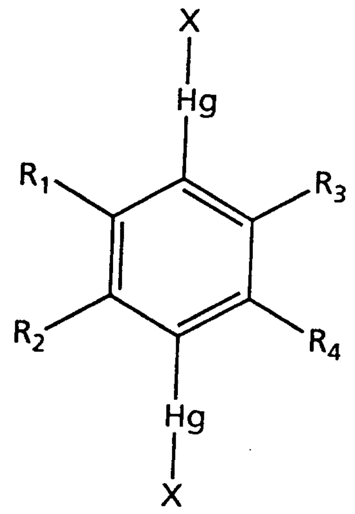

V

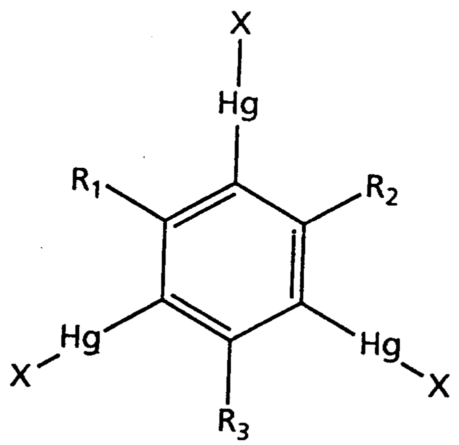

VI

In den Verbindungen der Formeln IV, V und VI bedeuten sämtliche Gruppen der Formel

X-Hg-

Reste der Struktur

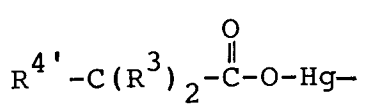

,

in welcher

$R^3$ unabhängig voneinander für Wasserstoffatome, Fluoratome, Chloratome, Bromatome oder Methylgruppen stehen und die Reste

$R^{4'}$ unabhängig voneinander für Wasserstoffatome, Fluoratome, Chloratome, Bromatome, Alkylreste, Halogenalkylreste,

cycloaliphatische Reste oder aromatische Reste stehen.

In den neuen pro Molekül zwei, beziehungsweise drei Quecksilber enthaltende Reste aufweisenden Verbindungen der Formeln IV, V und VI, bedeuten ferner die Reste $R_1$, $R_2$, $R_3$ und $R_4$ unabhängig voneinander Wasserstoffatome, aliphatische, cycloaliphatische oder aromatische Reste, wobei jedoch mindestens einer der Reste $R_1$, $R_2$, $R_3$ und $R_4$ für einen lipophilen Rest steht, der eine langkettige Alkylgruppe mit 5 - 20 Kohlenstoffatomen oder ein Aryl oder ein Aralkylrest ist, und wobei dieser lipophile Eigenschaften aufweisende Rest direkt oder über eine Aethergruppierung oder eine Estergruppierung oder eine Säureamidgruppierung oder eine Ketogruppe an den Benzolkern gebunden ist. Dieser mindestens eine lipophile Rest der neuen Verbindungen der Formeln IV, V und VI muss also an den Benzolkern über eine zweiwertige Gruppierung gebunden sein, die entweder eine Einfachbindung oder eine zweiwertige Gruppierung der Formeln

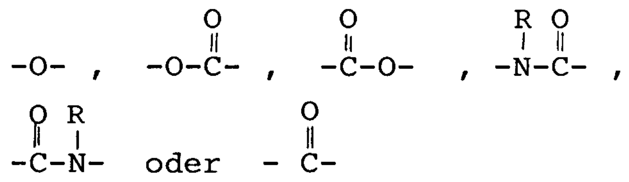

darstellt.

Weitere Quecksilber enthaltende Komplexbildner für Halogenidanionen, beziehungsweise Pseudohalogenidanionen, die in jüngster Zeit synthetisiert wurden, sind solche Verbindungen, bei denen an den aromatischen Kern, drei oder vier Quecksilber enthaltende Reste gebunden sind, wobei jedoch mindestens zwei der entsprechenden Reste an benachbarte Kohlenstoffatome des aromatischen Kerns gebunden sind. Beispiele für solche neue Komplexbildner, in welchen der aromatische Kern ein Benzolkern ist, sind die Verbindungen der folgenden Formeln VII, VIII und IX

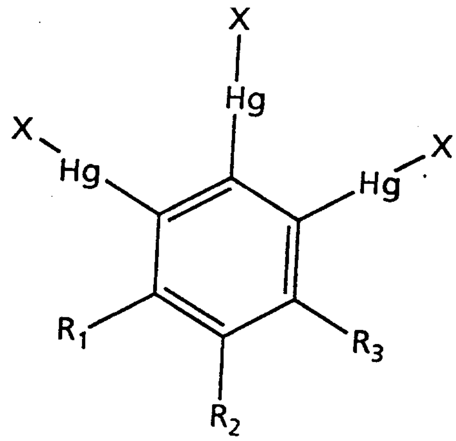

VII

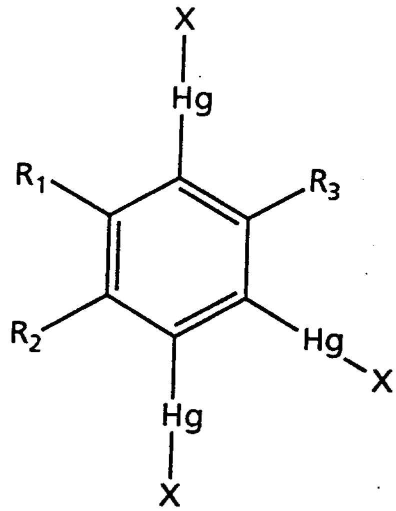

VIII

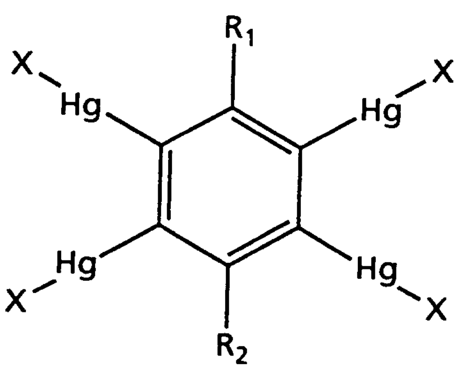

IX

,

wobei in diesen Verbindungen der Formeln VII, VIII und IX die Gruppen der Formel

X-Hg-

die gleiche Bedeutung aufweisen, wie die im Zusammenhang mit den Verbindungen der Formeln IV, V und VI erläutert wurde, und auch die Reste $R_1$, $R_2$ und $R_3$ die gleiche Bedeutung aufweisen, wie dies im Zusammenhang mit den entsprechenden Resten $R_1$, $R_2$ und $R_3$ der Verbindungen der Formeln IV, V und VI bereits erläutert wurde. In diesen Komplexbildnern für Halogenidionen und Pseudohalogenidionen muss also ebenfalls mindestens ein lipophile Eigenschaften aufweisender aliphatischer oder aromatischer Rest direkt oder über eine Aetherbindung, eine Esterbindung, eine Säureamidgruppe oder eine Ketogruppierung

an den Benzolkern gebunden sein.

Die neuen, Quecksilber enthaltenden Verbindungen der Formeln IV, V, VI, VII, VIII und IX, können durch direkte Merkurierung der entsprechenden quecksilberfreien Ausgangsmaterialien hergestellt werden, indem man diese mit einem Quecksilber-II-Salz der folgenden Formel

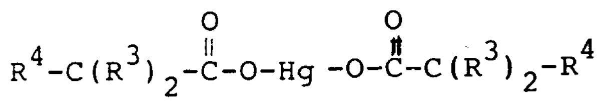

umsetzt.

Im allgemeinen ist es vorteilhaft, bei dieser Umsetzung mit dem Quecksilbersalz der organischen Säure als Lösungsmittel die entsprechende Säure zu verwenden, und so erfolgt die Herstellung der Verbindungen der Formeln IV, V, VI, VII, VIII und IX, in welchen der Rest $R^{4'}$ Fluor bedeutet, und beide Reste $R^3$ ebenfalls Fluoratome darstellen, durch Umsetzung des Quecksilbersalzes der Perfluoressigsäure in dem Lösungsmittel Perfluoressigsäure.

Ein weiterer Gegenstand der vorliegenden Erfindung sind die Halogenkomplexe der oben erwähnten neuen aromatischen, Quecksilber enthaltenden Verbindungen, in welchen zwei oder drei Quecksilber enthaltende Reste an solche Kohlenstoffatome gebunden sind, die sich nicht in in Nachbarstellung zueinander befinden, vorzugsweise Halogenkomplexe der neuen aromatischen Verbindungen der oben angegebenen Formeln IV, V und VI, wobei die entsprechenden komplexierten Halogenide vorzugsweise Fluoride, Bromide, Jodide, Rhodanide oder Cyanide sind.

Des weiteren betrifft die vorliegende Erfindung auch die neuen Halogenkomplexe der oben angegebenen neuen Quecksilber enthaltenden aromatischen Verbindungen, die pro Molekül drei oder vier Quecksilber enthaltende Reste aufweisen, wobei jedoch mindestens zwei dieser Reste sich in Nachbarstellung befinden, also vorzugsweise derjenigen neuen Verbindungen, welche die weiter oben angegebenen Formeln VII, VIII und IX aufweisen, und auch in diesem Falle sind die komplexierten Halogenidanionen vorzugsweise Chlorid, Bromid, Jodid, Rhodanid oder Cyanid.

Es zeigte sich, dass in den entsprechenden Halogenid, beziehungsweise Pseudohalogenidkomplexen der Verbindungen der Formeln IV, V, VI, VII, VIII und IX, vorzugsweise pro Quecksilberatom ein Halogenatom komplexiert ist.

Die mindestens zwei Quecksilberatome enthaltenden Verbindungen der Formel Ia

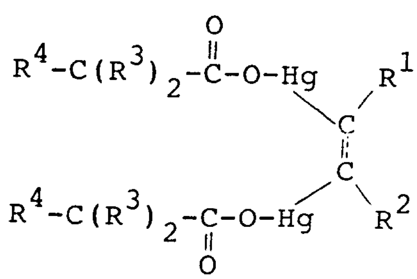

können hergestellt werden, indem man eine Verbindung der Formel

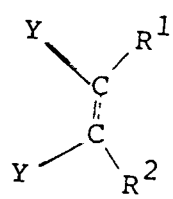

in welcher die Symbole

Y abspaltbare Gruppierungen darstellen, beispielsweise Wasserstoffatome oder Halogenatome,

mit einer Quecksilberverbindung einer organischen Säure der Formel

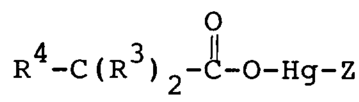

umsetzt, wobei in dieser Formel

Z eine abspaltbare Gruppe darstellt, beispielsweise einen weiteren Rest der Formel

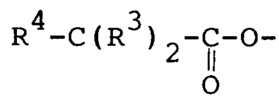

Bei der Herstellung der cyclischen Strukturen der Formel Ib und Ic ist es im allgemeinen vorteilhafter, von Ausgangsmaterialien auszugehen, die bereits in ihrer Struktur zwei Quecksilberatome enthalten und in ihrem Molekül mindestens eine Gruppierung der Formel

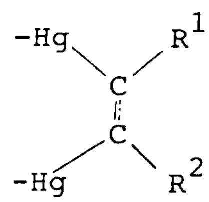

enthalten, wobei gegebenenfalls mehrere derartige Gruppierungen über Sauerstoffatome miteinander zu einem dimeren, trimeren oder polymeren Gerüst gebunden sein können,

und diese Verbindungen dann mit einer Dicarbonsäure der Formel

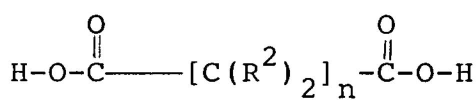

umsetzt, wobei sich die cyclischen Strukturen der Formel Ib, beziehungsweise Ic bilden.

Wie bereits erwähnt wurde, können die Quecksilber enthaltenden Verbindungen der Formel I aufgrund ihrer Selektivität für Anionen aus der Gruppe der Halogenide und Pseudohalogenide als Sensoren eingesetzt werden, die zur Bestimmung von Halogeniden, beziehungsweise Pseudohalogeniden in flüssigen Medien dienen.

Ein weiterer Gegenstand der vorliegenden Erfindung ist eine Vorrichtung zur Bestimmung von Halogeniden, beziehungsweise Pseudohalogeniden in wasserenthaltenden Medien, die dadurch gekennzeichnet ist, dass sie als Verbindung, die für die Anionen der Halogenide, beziehungsweise Pseudohalogenide, selektiv ist, einen Quecksilber enthaltenden Komplexbildner gemäss der weiter vorne angegebenen Formel I enthält.

Vorzugsweise enthalten diese Vorrichtungen als Komplexbildner Quecksilber enthaltende Verbindungen der Formel Ia, beziehungsweise Ib, beziehungsweise Ic, beispielsweise die entsprechenden neuen Verbindungen, die in ihrem Molekül mindestens einen langkettigen Alkylrest mit 5 bis 20 Kohlenstoffatomen enthalten, vorzugsweise die entsprechenden neuen Quecksilber enthaltenden Verbindungen, welche die im Anspruch 9 angegebenen Formeln Ia', Ib', beziehungsweise Ic' aufweisen.

Speziell bevorzugt, enthalten diese Vorrichtungen als Verbindungen, die gegenüber Halogenidionen, beziehungsweise Pseudohalogenidionen, selektiv sind, Verbindungen der weiter vorne angegebenen Formeln II, beziehungsweise III.

Die erfindungsgemässen Vorrichtungen werden insbesondere zur Bestimmung von Chlorid, Bromid, Jodid, Rhodanid oder Cyanid in wässrigen Medien eingesetzt, beispielsweise zur Bestimmungen dieser Ionen in biologischem Material, wie zum Beispiel im klinischen Bereich zur Bestimmung der entsprechenden Ionen in Körperflüssigkeiten, wie Blut, Blutserum, Blutplasma oder Harn.

Die entsprechenden Vorrichtungen enthalten die Quecksilber enthaltenden Komplexbildner der Formel I im allgemeinen auf einem Trägermaterial oder in einem Trägermaterial, wobei als verwendbare Trägermaterialien Cellulose und Cellulosederivate, beispielsweise Papier, wie ferner Polymermaterialien, wie entsprechende Polykondensationsprodukte, wie Polyester oder Polyamide, oder Polymermaterialien, die aus ungesättigten Polymereinheiten gebildet wurden, wie zum Beispiel Alkenen, Alkadienen, halogenierten Alkenen, ungesättigten Carbonsäuren und Anhydriden, beziehungsweise Nitrilen ungesättigter Carbonsäuren.

Als spezielle Polymermaterialien, in welche die erfindungsgemässen Trägermaterialien eingebettet vorliegen können, seien Homopolymerisate und Copolymerisate aus Polyvinylhalogeniden und Polyvinylidenhalogeniden genannt, wie zum Beispiel Homopolymerisate und Copolymerisate des Polyvinylchlorids, allenfalls entsprechende Polyvinylchloridcopolymeren mit geringen Anteilen an stärker hydrophilen Monomereinheiten, beispielsweise Monomereinheiten des Polyvinylalkohols oder der Maleinsäure.

Im allgemeinen enthalten die Polymermaterialien, die als Trägermaterial für die Quecksilber enthaltenden Sensoren für Halogenide und Pseudohalogenide eingesetzt werden, als weitere Komponente einen Weichmacher, insbesondere einen Weichmacher auf Basis eines Aethers oder Esters mit einer längerkettigen lipophilen Gruppierung. Als spezielle Beispiele für entsprechende Weichmacher seien Dicarbonsäurediester, beziehungsweise Tetracarbonsäuretetraester genannt, in denen mindestens einer der esterbildenden Alkohole eine längerkettige Alkylgruppe aufweist, wie zum Beispiel entsprechende Ester der Adipinsäure oder der Sebacinsäure, in denen der esterbildende Alkohol mindestens 5 Kohlenstoffatome, vorzugsweise 7 bis 15 Kohlenstoffatome, aufweist.

Entsprechende Weichmacher enthaltende Polymermembranen, die als gegenüber Halogenidionen, beziehungsweise Pseudohalogenidionen selektiver Komponente die Quecksilberverbindungen der Formel I enthalten, haben im allgemeinen die folgende Zusammensetzung:

| Anionselektive Membran | |
|---|---|
| Bestandteil | Menge in Gew.-% |
| Quecksilber enthaltende Verbindung | 0,5 - 6, vorzugsweise 1 - 3 |
| Polymermaterial | 30 - 40, vorzugsweise 31 - 35 |
| Weichmacher | 55 - 69,5, insbesondere 62 - 68 |

Bei der Herstellung von gegenüber Halogenidionen, beziehungsweise Pseudohalogenidionen selektiven Membranen auf Basis von Quecksilber enthaltender Verbindung, lipophilem Weichmacher und Polymermaterial, zeigte es sich, dass bei der elektrometrischen Bestimmung der entsprechenden Halogenide, beziehungsweise Pseudohalogenide, in wässrigen Medien oft der lineare Bereich der Elektrodenfunktion nur relativ kurz war. Bei diesen Bestimmungen wurde in an sich bekannter Weise auf der Abszisse die molare Aktivität des zu bestimmenden Anions im logarithmischen Masstab und auf der Ordinate die gemessene EMK in Millivolt aufgetragen, und in diesem Falle war, wie erwähnt, der entsprechend lineare Bereich der Messkurve oft nicht ausreichend gross. Insbesondere waren diese Nachteile feststellbar, wenn als Polymermaterial Polyvinylchlorid verwendet wurde, und es wird vermutet, dass die oft zu geringe Linearität der Elektrodenfunktion auf Anionen zurückzuführen ist, die in geringsten Mengen im Polyvinylchlorid vorhanden sind, das im Handel erhältlich ist und die von der Herstellung des Polyvinylchlorides herrühren. Möglicherweise handelt es sich bei diesen Anionen um lipophile anionische Zentren.

Ueberraschenderweise wurde jetzt gefunden, dass der lineare Bereich der Elektrodenfunktion wesentlich vergrössert werden kann, indem man den gegenüber Halogenidanionen und Pseudohalogenidanionen selektiven Membranen als weitere Komponente ein quaternäres Ammoniumsalz mit mindestens einer lipophilen Gruppe, vorzugsweise einer langkettigen Alkylgruppe, einverleibt. Bevorzugte quaternäre Ammoniumsalze sind die Halogenide von Tetraalkylammoniumverbindungen, die in ihrem Molekül zwei langkettige Alkylgruppen und zwei kurzkettige Alkylgruppen oder drei langkettige Alkylgruppen und eine kurzkettige Alkylgruppe aufweisen, wobei bevorzugte langkettige Alkylgruppen solche mit 5 bis 20 Kohlenstoffatomen, insbesondere 7 bis 20 Kohlenstoffatomen sind. Als spezielle Beispiele für entsprechende verwertbare Ammoniumverbindungen seien das Methyl-tridodecyl-ammoniumchlorid und das Dimethyl-dioctadecyl-ammoniumbromid genannt.

Es zeigte sich, dass sehr geringe Mengen an diesen quaternären Ammoniumsalzen ausreichend sind, um den linearen Bereich der Elektrodenfunktion in der erwünschten Weise auszudehnen. Zu diesem Zwecke wurden Elektrodenmembranen hergestellt, in denen der Gehalt an Quecksilber enthaltender Verbindung, Polyvinylchlorid und Weichmacher, im oben erwähten Bereich lag, und die beispielsweise 2

Gew.-% der Quecksilber enthaltenden Verbindung, 33 Gew.-% an Polyvinylchlorid und 65 Gew.-% an Weichmacher enthielten, sodass der Gesamtgehalt dieser Membranen aus Quecksilber enthaltender Verbindung, Polyvinylchlorid und Weichmacher 100 Gew.-% betrug. In die Membranen wurde pro Mol der Quecksilberverbindung 0,5 - 10 Mol-% Ammoniumverbindung einverleibt und besonders vorteilhafte Messergebnisse wurden erzielt, wenn die entsprechenden Membranen als weitere Komponente 1 - 5 Mol-%, insbesondere 2 - 3 Mol-% der entsprechenden quaternären Ammoniumverbindung enthielten.

Ueberraschenderweise zeigte es sich, dass es mit Hilfe der Quecksilber enthaltenden Sensoren der Formel I möglich ist, ionenselektive Membranen herzustellen, welche eine höhere Selektivität für die Anionen Chlorid, Jodid, Bromid und Rhodanid aufweisen, als für andere Anionen, wie Sulfat, Nitrat, Phosphat, Carbonat, Acetat, Salicylat, Perchlorat und Fluorid. Für die Anwendung im klinischen Bereich ist es von besonderer Bedeutung, dass Vorrichtungen zur Bestimmung von Halogenidanionen, welche entsprechende ionenselektive Teile, beispielsweise ionenselektive Membranen, enthalten, eine höhere Selektivität für die Halogenidanionen aus der Gruppe Chlorid, Jodid und Bromid im Vergleich zu Salicylat, Bicarbonat und Acetat aufweisen.

Die Erfindung sei nun anhand von Beispielen näher erläutert:

Beispiel 1

Herstellung von Komplexbildnern, welche der folgenden Formel II

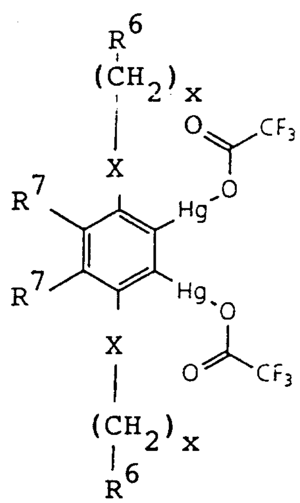

II

entsprechen, wobei in dieser Formel die Symbole und Substituenten die folgende Bedeutung aufweisen.

Die beiden Gruppen X sind Aethergruppen der Formel -O-,

die beiden Symbole x bedeuten die Zahl 8,

beide Reste $R^6$ sind Wasserstoffatome,

beide Reste $R^7$ sind Methylgruppen.

Die entsprechenden Verbindungen wurden hergestellt, indem man zunächst das Phenol der Formel

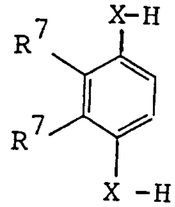

mit einem Alkylhalogenid der Formel

$R^6$-$(CH_2)_x$-Hal

zu dem aromatischen Diäther der Formel

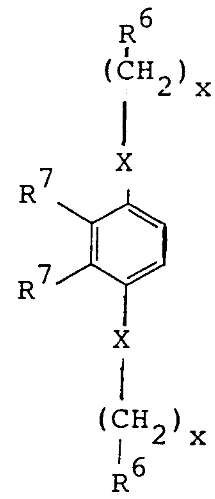

umsetzte. Als Alkylhalogenid wird vorzugsweise das entsprechende Bromid verwendet, und die Umsetzung erfolgt in Anwesenheit einer basischen Verbindung, die zum Abfangen des bei der Reaktion gebildeten Halogenwasserstoffes dient, beispielsweise eines Alkalicarbonates, wie Cäsiumcarbonat. Im allgemeinen wird die Reaktion in einem organischen Lösungsmittel durchgeführt, beispielsweise in Dimethylformamid.

Anschliessend wurde dann die gebildete Diätherverbindung mit dem Quecksilbersalz der Trifluoressigsäure der Formel

$Hg(OCOCF_3)_2$

umgesetzt, wobei bei dieser Umsetzung ausserdem Trifluoressigsäure anwesend war, beispielsweise als Lösungsmittel zur Durchführung der Umsetzung verwendet wurde.

Beispiel 2

In diesem Beispiel wurde eine Quecksilberverbindung der folgenden Formel III

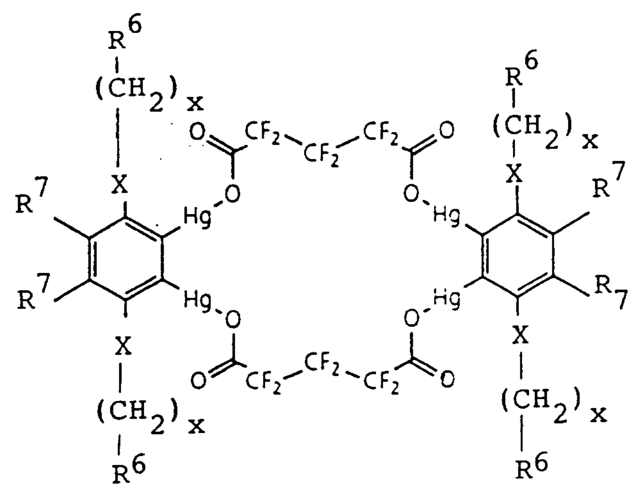

III

hergestellt, wobei in dieser cyclischen Quecksilberverbindung die Symbole und Substituenten die folgende Bedeutung aufwiesen:

Sämtliche vier Gruppen X waren Aethergruppierungen der Formel -O-.

Die vier Symbole x bedeuteten die ganze Zahl 8.

Die vier Reste $R^6$ waren Wasserstoffatome.

Die vier Reste $R^7$ waren Methylgruppen.

In dieser vier Quecksilberatome aufweisenden cyclischen Verbindung der Formel III hatten also die Symbole X, x, $R^6$ und $R^7$ die gleiche Bedeutung, wie in den pro Molekül zwei Quecksilberatome aufweisenden Verbindungen der Formel II, die nach dem Verfahren des vorangegangenen Beispiels 1 hergestellt wurden.

Die Herstellung der Verbindungen der Formel III erfolgte dementsprechend auch ausgehend von den Verbindungen der Formel II, die als Endprodukt des Verfahrens des Beispiels 1 erhalten wurden.

Die Verbindungen der Formel II wurden mit einer Base behandelt, beispielsweise mit Natriumhydroxyd, wobei sichein polymeres Quecksilbersalz der Struktur

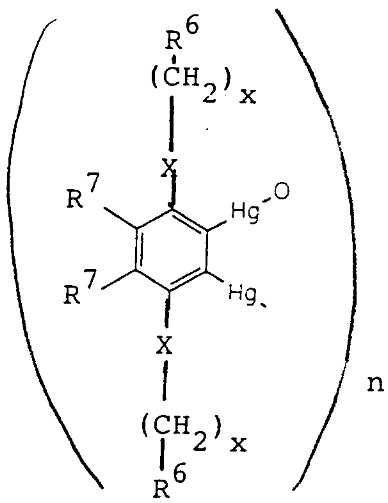

bildete. Dieses Quecksilbersalz wurde durch Umsetzung mit der Perfluorbernsteinsäure der Formel

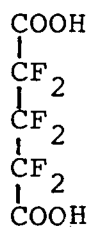

in die gewünschte cyclische Verbindung der oben angegebenen Formel III übergeführt. Die Umsetzung mit der Perfluorbernsteinsäure erfolgte in einem polare Eigenschaften aufweisenden Lösungsmittel, beispielsweise einem Aether, wie zum Beispiel Dimethoxyäthan. Unter Verwendung dieses Lösungsmittels und bei Rühren unter Raumtemperatur, wurde eine Ausbeute von 58 % der theoretischen Ausbeute der cyclischen Verbindung der Formel III erhalten.

Beispiel 3

Herstellung der gegenüber Halogenidionen, beziehungsweise Pseudohalogenidionen empfindlichen Membranen.

Die Herstellung der Membranen erfolgte nach an sich bekannten Arbeitsverfahren, indem man den Quecksilber enthaltenden Komplexbildner, das Polymermaterial, den Weichmacher und gegebenenfalls die zusätzlich anwesende quaternäre Ammoniumverbindung in einem organischen Lösungsmittel löste und diese Lösung zu Membranen vergoss, wobei dann nach dem Abdampfen des Lösungsmittels die entsprechende halogenidselektive Membran erhalten wurde. Das eingesetzte Lösungsmittel ist vorzugsweise ein flüchtiges, schwach polare Eigenschaften aufweisendes aprotisches Lösungsmittel, wie beispielsweise ein Aether, insbesondere Tetrahydrofuran. Bei der Herstellung der hier beschriebenen Membranen wurde das folgende Arbeitsverfahren eingehalten:

Eine Mischung aus 180 mg der Feststoffe (nämlich Quecksilber enthaltende Verbindung, Weichmacher plus Polyvinylchlorid und allenfalls der quaternären Ammoniumverbindung als weitere Komponente), wurde

mit 2 ml Tetrahydrofuran in einem verschlossenen Gefäss während 6 Stunden geschüttelt. Anschliessend wurde auf eine Glasplatte ein Glasring eines Durchmessers von 28 mm gegeben und die Lösung in diesen Glasring eingegossen.

Nach dem Abdampfen des Tetrahydrofurans erhielt man gegenüber Halogenidionen empfindliche Membranen, die eine Dicke von 180 - 220 µm, vorzugsweise etwa 200 µm aufweisen.

Die Membranen hatten die folgende Zusammensetzung:

| Bestandteil | Menge in Gew.-% |
|---|---|
| Verbindung der Formel I | 0,5 - 3 % |
| Weichmacher | 65 - 66,5% |
| Polyvinylchlorid | 32 - 33 % |

Die entsprechenden Membranen waren frei von lipophilen Ammoniumverbindungen oder sie enthielten 1 Mol-%, beziehungsweise 2,5 Mol-%, beziehungsweise 5 Mol-%, beziehungsweise 10 Mol-% an der quaternären Ammoniumverbindung, die entweder das Methyl-tridodecylammoniumchlorid oder das Dimethyl-dioctadecyl-ammoniumbromid war.

Beispiel 4

Nach dem in Beispiel 3 beschriebenen Verfahren wurde eine gegenüber Halogenidionen selektive Membran hergestellt, die als Sensor die nach dem Verfahren gemäss Beispiel 1 hergestellte Verbindung der Formel II enthielt.

Die Membranen hatten die folgende Zusammensetzung:

| Bestandteil | Menge in Gew.-% |
|---|---|
| Verbindung gemäss Beispiel 1 | 2 |
| Dioctylsebacat | 65 |
| Polyvinylchlorid | 33 |

Entsprechende Membranen, die zusätzlich noch 1 Mol-%, 2,5 Mol-%, bzw. 5 Mol-% an dem quaternären Ammoniumsalz Methyl-tridodecyl-ammoniumchlorid oder Dimethyl-dioctadecyl-ammoniumbromid enthielten, wiesen über einen Konzentrationsbereich der Chloridionen von $10^{-2}$ bis $10^{-5}$ eine lineare Steigung der Elektrodenfunktion auf.

Die entsprechenden Membranen hatten ferner eine gute Selektivität für Chlorid, Bromid, Jodid und Rhodanid, im Vergleich zu anderen Anionen, wie Perchlorat, Nitrat, Acetat, Fluorid, Hydrogencarbonat, Hydrogenphosphat und Sulfat.

Der entsprechende Selektivitätsfaktor, ausgedrückt als

$$\log K^{Pot}_{Cl\ Anion}$$

betrug für die entsprechende Membran mit einem Gehalt von 2,5 Mol-% an Methyl-tridodecyl-ammoniumbromid gegenüber Salicylatanionen -0,5, gegenüber Perchloratanionen -1,8, gegenüber Nitratanionen -3,2, gegenüber Acetatanionen -5,1, gegenüber Fluoridanionen und Bicarbonatanionen -5,5, gegenüber Phosphatanionen -6 und gegenüber Sulfatanionen -6,5. Andererseits hatte die entsprechende chloridselektive Membran eine höhere Selektivität für Jodidionen als für Chloridionen, der entsprechende Faktor betrug für Jodidionen +1,0. Somit war die entsprechende Membran gegenüber Jodidanionen im Vergleich zu den anderen genannten Anionen, noch wesentlich selektiver als die Werte, die für die Chloridanionen angegeben sind. Die genannte Membran wies ferner eine Selektivität für Bromidionen auf, die etwas geringer war als diejenige für Chloridionen, nämlich der entsprechende Wert der Chloridselektivität gegenüber Bromidanionen betrug -0,3. Die Membran hatte ferner in etwa die gleiche Selektivität für Rhodanid wie gegenüber Salicylationen.

Entsprechende Membranen, die pro Mol Hg-Sensor 5 Mol-% an dem Methyl-tridodecyl-ammoniumchlorid enthielten, hatten die gleiche Selektivität für Chloridionen wie für Bromidionen, d.h. der entsprechende Wert für Chloridionen im Vergleich zu Bromidionen war Null. Diese Membranen hatten eine noch höhere Selektivität für Jodidionen als die erstgenannten, nämlich der entsprechende Wert der Selektivität für Chlorid im Vergleich zu Jodid war +1,4. Diese zuletzt genannten Membranen hatten jedoch eine geringere Selektivität für Chlorid im Vergleich zu Rhodanid, nämlich der entsprechende Faktor betrug -0,3. Erfreulicherweise zeigten die Membranen jedoch eine noch höhere Selektivität für Chlorid und Bromid im Vergleich zu Salicylat, nämlich der entsprechende Wert betrug -0,6. Diese Membranen sind also gut geeignet, um im klinischen Bereich Chlorid, Bromid und Jodid auch bei solchen Patienten zu bestimmen, die einer Behandlung mit Salicylat unterworfen sind.

Beispiel 5

Nach dem in Beispiel 3 beschriebenen Verfahren wurden halogenidselektive Membranen unter Verwendung der gemäss Beispiel 2 hergestellten Quecksilberverbindung der Formel III hergestellt.

Es wurden Membranen unterschiedlicher Zusammensetzung hergestellt, und zwar enthielten sie 1 Gew.-%, beziehungsweise 2 Gew.-% an der Quecksilberverbindung der Formel III, 33 Gew.-% an Polyvinylchlorid und ferner 66 Gew.-%, beziehungsweise 65 Gew.-% an dem Dioctylsebacat.

Des weiteren wurde auch noch Membranen hergestellt, die 3 Gew.-% an der Quecksilberverbindung der Formel III, 33 Gew.-% an Polyvinylchlorid und 65 Gew.-% an dem Dioctylsebacat enthielten.

Alle diese Membranen hatte eine gute Selektivität für die Ionen Bromid, Rhodanid, Chlorid und Jodid, im Vergleich zu anderen Anionen, wie Bicarbonat, Hydrogenphosphat, Acetat, Nitrat, Sulfat und Perchlorat. Die Selektivität sämtlicher Membranen für Chlorid gegenüber den anderen genannten Anionen, ausgedrückt als

$$\log K^{Pot}_{Cl\ Anion}$$

betrug -2,0 bis - 6,0.

Des weiteren wurden die Membranen mit einem Gehalt von 2 Gew.-% an der Quecksilberverbindung der Formel III (und dementsprechend 65 Gew.-% an dem Weichmacher Dioctylsebacat) noch durch die Zugabe von 1 Mol-%, 2,5 Mol-%, beziehungsweise 5 Mol-%, beziehungsweise 10 Mol-% an dem quaternären Ammoniumsalz Methyltridodecyl-ammoniumchlorid oder Dimethyl-dioctadecylammoniumbromid pro Mol der Quecksilberverbindung modifiziert.

Die Membran mit einem Gehalt von 1 Mol-% an dem Methyl-tridodecyl-ammoniumchlorid hatte eine gute Selektivität für Chloridionen im Vergleich zu Salicylationen, der entsprechende Wert betrug -1. Die Selektivität dieser Membran für Chloridionen gegenüber Jodid-und Bromidionen war gering, die entsprechenden Werte betrugen für Jodid -0,2 und für Bromid -0,3.

Die entsprechende Selektivitätsfaktoren dieser Membran gegenüber den Ionen Perchlorat, Fluorid, Acetat, Hydrogenphosphat, Hydrogencarbonat, Nitrat und Sulfat war hoch, die entsprechenden Werte lagen im Bereich von -3 bis -4,6.

Membranen einer analogen Zusammensetzung, die jedoch einen höheren Gehalt an dem Methyltridodecylammoniumchlorid aufwiesen, hatten eine höhere Selektivität für Jodid, Bromid und Rhodanid als für Chlorid. Die entsprechenden Selektivitätsfaktoren betrugen für Jodid +1,0 und für Bromid und Rhodanid war die Selektivität nur minimal höher als für Chlorid, der entsprechende Wert betrug +0,05.

Der Selektivitätskoeffizient dieser Membran gegenüber Salicylat war geringer, der entsprechende Wert betrug -0,5, und auch der Selektivitätskoeffizient gegenüber den anderen angeführten Anionen lag im Bereich von -2 bis -4, und war damit geringer als derjenige der Membranen, die nur 1 Mol-% an dem quaternären Ammoniumsalz enthielten.

Man sieht aus diesen Ergebnissen, dass die Membranen mit einem Gehalt von 2,5 Mol-%, und insbesondere diejenigen mit einem Gehalt von 1 Mol-% an Methyl-tridodecyl-ammoniumchlorid gut geeignet sind, um im klinischen Bereich die Bestimmung von Chlorid, Jodid und Bromid in Körperflüssigkeiten durchzuführen, auch bei solchen Patienten, die einer Behandlung mit Salicylaten unterworfen sind.

Aehnliche Ergebnisse wurden mit Membranen erhalten, die als quaternäres Ammoniumsalz 2,5 Mol-% an dem Dimethyl-dioctadecyl-ammoniumbromid enthielten.

Membranen, die 2,5 Mol-% an einem der beiden genannten quaternären Ammoniumsalze enthielten, wiesen ausserdem eine sehr kurze Anspruchzeit auf, und zwar betrug diese Ansprechzeit knapp unter 10 Sekunden, während die Ansprechzeit analog aufgebauter Membranen ohne Gehalt an der quaternären Ammoniumverbindung 60 Sekunden betrug.

**Patentansprüche**

**1.** Quecksilber enthaltende Komplexbildner für Anionen, dadurch gekennzeichnet, dass die Komplexbildner eine Selektivität für Anionen aus der Gruppe der Halogenide und Pseudohalogenide aufweisen, und dass diese Komplexbildner pro Molekül mindestens zwei Quecksilberatome enthalten und die folgende Formel I

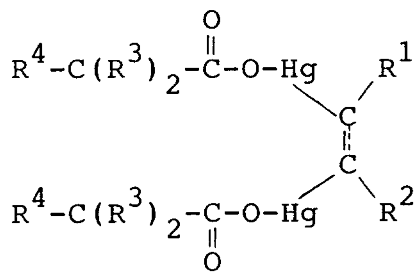

aufweisen, in welcher

- $R^1$ und $R^2$ unabhängig voneinander Wasserstoffatome, aliphatische, cycloaliphatische oder aromatische Reste darstellen oder
- $R^1$ und $R^2$ gemeinsam mit den beiden Kohlenstoffatomen, an welche sie gebunden sind, einen cycloaliphatischen, aromatischen oder heteroaromatischen einkernigen oder mehrkernigen Rest darstellen,
- $R^3$ unabhängig voneinander für Wasserstoffatome, Fluoratome, Chloratome, Bromatome oder Methylgruppen stehen,
- $R^4$ unabhängig voneinandern für Wasserstoffatome, Fluoratome, Chloratome, Bromatome, Alkylreste, Halogenalkylreste, cycloaliphatische Reste oder aromatische Reste stehen oder die beiden Reste $R^4$ gemeinsam eine Gruppierung darstellen, welche die Verbindungen der Formel I zu einer cyclischen Struktur ringschliessen, wobei diese zweiwertige ringschliessende Gruppierung vorzugsweise weitere Quecksilberatome enthält und
- $\overline{- - -}$ anzeigt, dass zwischen den beiden Kohlenstoffatomen eine Einfach- oder Doppelbindung vorhanden ist und wobei ferner dann, wenn die beiden Kohlenstoffatome miteinander durch eine Einfachbindung verbunden sind, an diese beiden Kohlenstoffatome je ein weiterer Substituent gebunden ist, der aus der Gruppe Wasserstoff, Halogenatome oder Alkyl, Cycloalkyl oder Arylreste ausgewählt ist,

sowie Halogenkomplexe der Verbindungen der Formel I.

**2.** Komplexbildner gemäss Anspruch 1, dadurch gekennzeichnet, dass er die Formel Ia

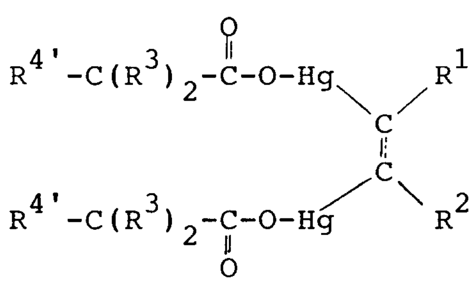
Ia

aufweist, in welcher die beiden Reste $R^{4'}$ unabhängig voneinander für Wasserstoffatome, Fluoratome, Chloratome, Alkylreste, Halogenalkylreste, vorzugsweise perhalogenierte Alkylreste, cycloaliphatische Reste oder aromatische Reste stehen und

$R^1$, $R^2$ und $R^3$ die gleiche Bedeutung aufweisen wie in der Formel I.

3. Komplexbildner gemäss Anspruch 1, dadurch gekennzeichnet, dass sie die folgende Formel Ib

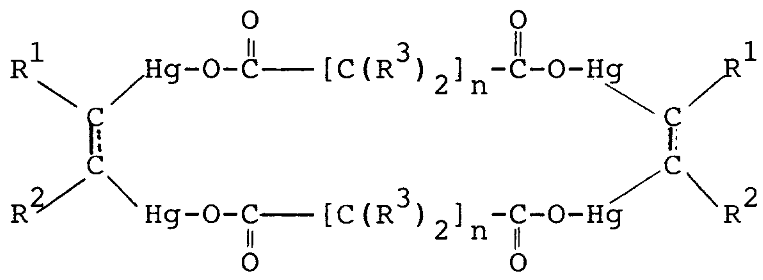

Ib

aufweisen, wobei in dieser Formel die beiden Symbole n jeweils eine ganze Zahl im Bereich von 2 bis 7, vorzugsweise jeweils 3 oder 4, darstellen und
$R^1$, $R^2$, $R^3$ und die Symbole ---- die gleiche Bedeutung aufweisen wie in Formel I.

4. Komplexbildner gemäss Anspruch 1, dadurch gekennzeichnet, dass sie folgende Formel Ic

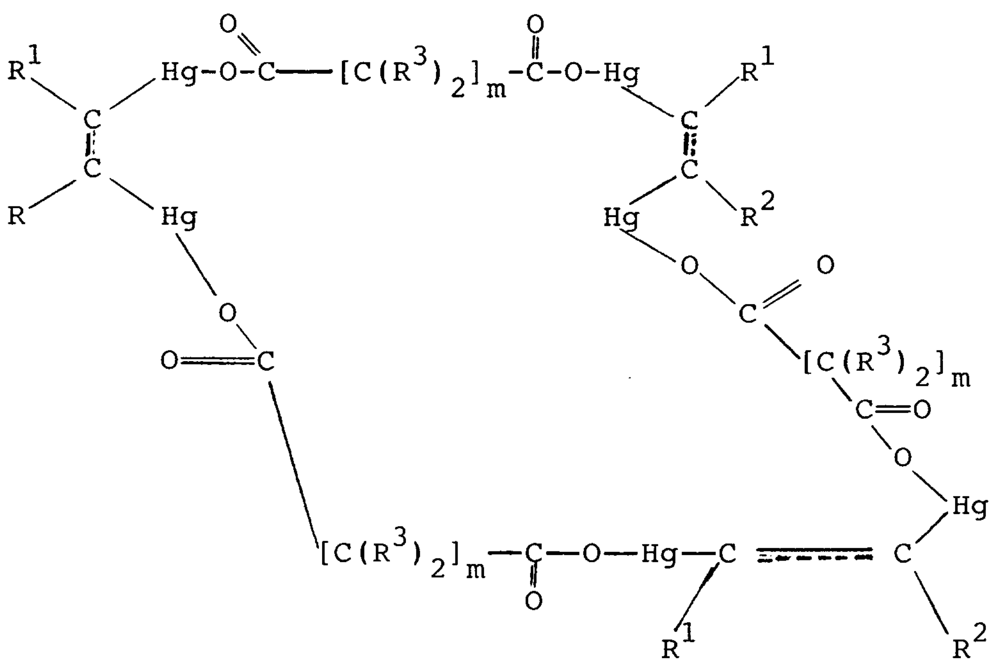

Ic

aufweisen,
wobei in dieser Formel Ic die Symbole m unabhängig voneinander für eine ganze Zahl im Bereich von 1 bis 7 stehen und $R^1$, $R^2$, $R^3$ und das Symbol ---- die gleiche Bedeutung aufweisen wie in Formel I.

5. Komplexbildner gemäss einem der Ansprüche 1 bis 4, dadurch gekennzeichnet, dass in ihnen mindestens ein Substituent vorhanden ist, der eine Alkylgruppe mit 5 bis 20 Kohlenstoffatomen darstellt, vorzugsweise eine entsprechende geradkettige Alkylgruppe, wobei dieser Substituent an die Verbindungen der Formel I, Ia, Ib, beziehungsweise Ic, direkt oder über eine Aethergruppierung, Estergruppierung oder eine Säureamidgruppierung gebunden ist.

6. Komplexbildner gemäss einem der Ansprüche 1 bis 5, dadurch gekennzeichnet, dass in ihnen die Reste $R^3$ Wasserstoffatome oder Fluoratome bedeuten und vorzugsweise sämtliche Reste $R^3$ Fluoratome sind.

7. Komplexbildner gemäss einem der Patentansprüche 1 bis 6, dadurch gekennzeichnet, dass in ihnen die Gruppierungen der Formel

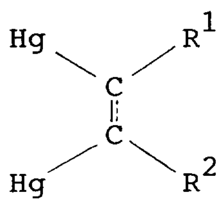

für Arylreste der Formel

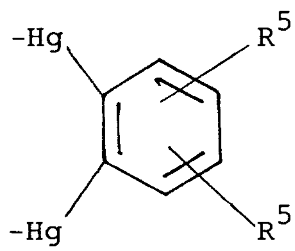

stehen, wobei in dieser Formel mindestens einer der beiden Reste $R^5$ eine Alkylgruppe mit 5 bis 20 Kohlenstoffatomen bedeutet, vorzugsweise eine geradkettige Alkylgruppe, wobei dieser Rest an den Benzolkern direkt, über ein Aethersauerstoffatom, eine Estergruppierung oder eine Säureamidgruppierung gebunden ist und der andere der beiden Reste $R^5$ die gleiche Bedeutung aufweist oder ein Wasserstoffatom oder einen Alkylrest darstellt oder

die beiden Reste $R^5$ gemeinsam einen ankondensierten aromatischen oder heteroaromatischen Rest darstellen.

8. Komplexbildner gemäss Anspruch 7, dadurch gekennzeichnet, dass sie die folgende Formel II oder III

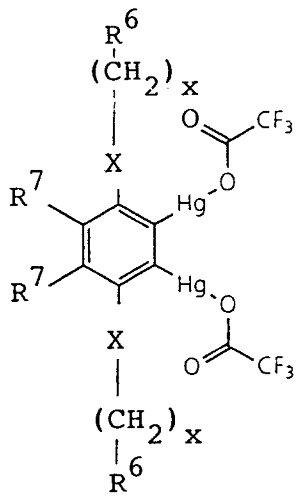

II

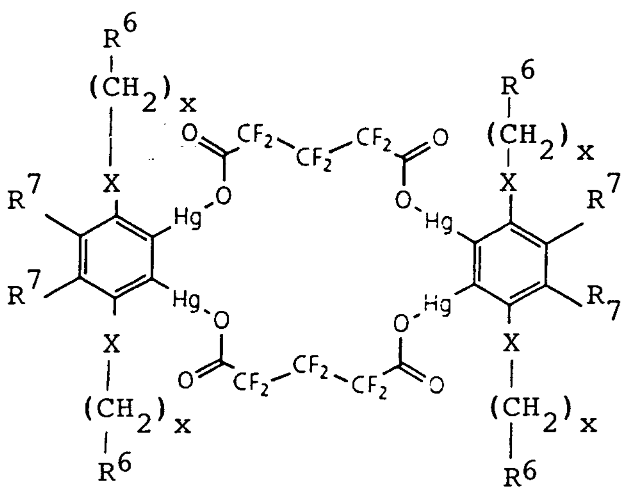

III

aufweisen, wobei in diesen Formeln die Gruppen

-X- unabhängig voneinander eine Einfachbindung oder Gruppen der Formeln

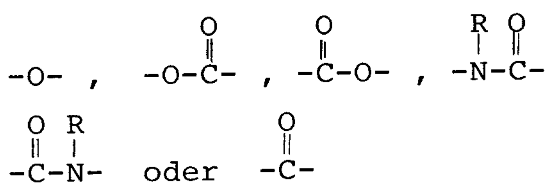

worin R Wasserstoff, Alkyl, Cycloalkyl oder Aryl ist,

darstellen,

die Symbole

x unabhängig voneinander ganze Zahlen im Bereich von 5 bis 20 darstellen,

die Reste $R^6$ unabhängig voneinander Wasserstoffatome, Cycloalkylgruppen oder Arylreste bedeuten und

die Reste $R^7$ unabhängig voneinander Wasserstoffatome, Halogenatome, Alkylgruppen oder Alkoxygruppen bedeuten, wobei die in den Gruppierungen X, beziehungsweise $R^6$ allenfalls vorhandenen Aryl-, beziehungsweise Cycloalkylreste vorzugsweise Phenylreste, beziehungsweise Cyclohexylreste sind, sowie

Halogenkomplexe der Quecksilberverbindungen der Formeln II und III, die vorzugsweise pro Quecksilberatom ein Halogenatom komplexiert enthalten, vorzugsweise Chlor, Brom, Iod, Rhodanid oder Cyanid.

**9.** Komplexbildner gemäss Anspruch 1, dadurch gekennzeichnet, dass sie die Formel I aufweisen, wobei in dieser Formel die Gruppierung der Struktur

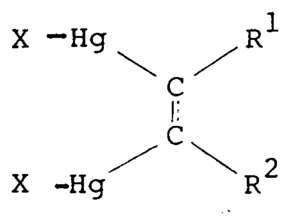

,

in welcher beide Reste der Formel

X-Hg-

für Gruppen der Formel

$$R^{4'}-C(R^3)_2-C(=O)-O-Hg-$$

stehen, in welcher die Reste

- $R^3$ unabhängig voneinander für Wasserstoffatome, Fluoratome, Chloratome, Bromatome oder Methylgruppen stehen und die Reste
- $R^{4'}$ unabhängig voneinander für Wasserstoffatome, Fluoratome, Chloratome, Bromatome, Alkylreste, Halogenalkylreste, cycloaliphatische Reste oder aromatische Reste stehen,

für ein einkerniges oder mehrkerniges aromatisches Ringsystem steht, wobei die Gruppierung der angebenen Struktur veranschaulicht, dass die beiden Quecksilber enthaltenden Reste in ortho-Stellung zueinander an das aromatische System gebunden sind, und wobei an dieses aromatische System ein oder zwei weitere Reste der Formel

$$R^{4'}-C(R^3)_2-C(=O)-O-Hg-$$

in beliebiger Stellung zu den gezeigten ortho-ständigen Quecksilber enthaltenden Resten gebunden sind, und ferner an das aromatische System ausserdem mindestens ein lipophiler Rest gebunden ist, der ein langkettiger Alkylrest mit 5 - 20 Kohlenstoffatomen, ein Arylrest oder ein Aralkylrest ist, und wobei dieser lipophile Eigenschaften aufweisende Rest direkt oder über eine Aethergruppierung oder eine Estergruppierung oder eine Säureamidgruppierung oder eine Ketogruppe an einen Benzolkern des aromatischen Systems gebunden ist, und wobei bevorzugte derartige pro Molekül insgesamt 3 oder 4 Quecksilber enthaltende Reste aufweisende Komplexbildner solche sind, in welchen das aromatische Grundgerüst ein Benzolkern ist, und diese bevorzugten Komplexbildner die folgenden Formeln VII, VIII oder IX

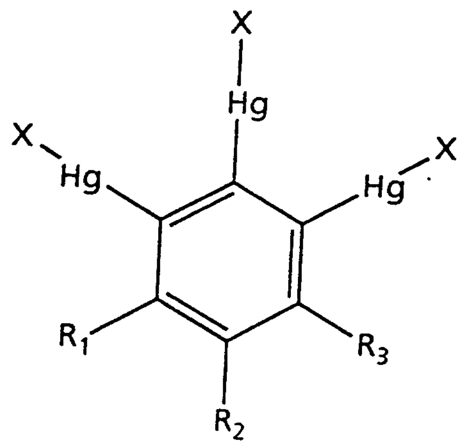

VII

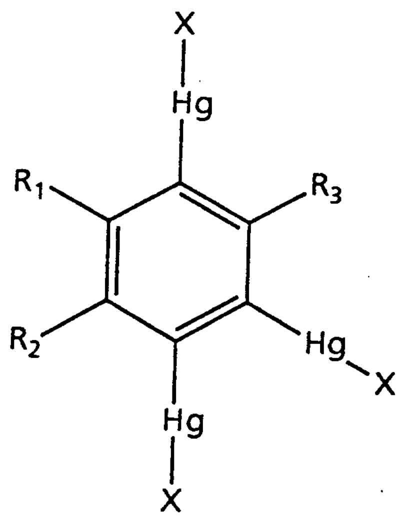

VIII

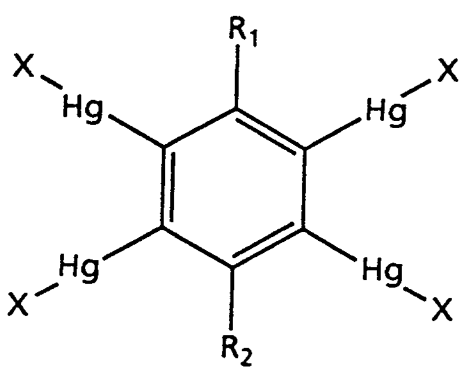

IX

,

aufweisen,
wobei in diesen Verbindungen der Formeln VII, VIII und IX die Gruppen der Formel

X-Hg-

die oben angegebene Bedeutung besitzen und
die Reste $R_1$, $R_2$, $R_3$ und $R_4$ unabhängig voneinander Wasserstoffatome, aliphatische, cycloaliphatische oder aromatische Reste bedeuten, wobei jedoch mindestens einer der Reste $R_1$, $R_2$, $R_3$ und $R_4$ für einen lipophilen Rest steht, der eine langkettige Alkylgruppe mit 5 - 20 Kohlenstoffatomen oder ein Aryl oder Aralkylrest ist, und wobei dieser lipophile Eigenschaften aufweisende Rest direkt oder über eine

Aethergruppierung oder eine Estergruppierung oder eine Säureamidgruppierung oder eine Ketogruppe an den Benzolkern gebunden ist,

sowie Halogenkomplexe dieser aromatischen Komplexbildner der Formel I.

**10.** Quecksilber enthaltende Komplexbildner für Anionen, dadurch gekennzeichnet, dass die Komplexbildner eine Selektivität für Anionen aus der Gruppe der Halogenide und Pseudohalogenide aufweisen, und dass sie ein oder mehrkernige aromatische Verbindungen sind, die pro Molekül zwei oder drei an das aromatische System gebundene, Quecksilber enthaltende Reste der Formel

$$R^{4'}-C(R^3)_2-\overset{O}{\overset{\|}{C}}-O-Hg-$$

aufweisen, wobei in dieser Formel

$R^3$ unabhängig voneinander für Wasserstoffatome, Fluoratome, Chloratome, Bromatome oder Methylgruppen stehen und die Reste

$R^{4'}$ unabhängig voneinander für Wasserstoffatome, Fluoratome, Chloratome, Bromatome, Alkylreste, Halogenalkylreste, cycloaliphatische Reste oder aromatische Reste stehen und

wobei die genannten 2 oder 3 Quecksilber enthaltenden Reste der angegebenen Formel an das aromatische System, nicht an benachbarte Kohlenstoffatome, gebunden sind, und wobei an das aromatische System zusätzlich mindestens ein lipophile Eigenschaften aufweisender Rest, der eine langkettige Alkylgruppe mit 5 - 22 Kohlenstoffatomen oder ein Aryl oder ein Aralkylrest ist, direkt oder über eine Aethergruppierung, eine Estergruppierung, eine Säureamidgruppe oder eine Ketogruppe gebunden ist, und wobei bevorzugte aromatische Verbindungen mit 2 oder 3 Quecksilber enthaltenden Gruppen der angegebenen Formeln solche sind, die als aromatisches Grundgerüst einen Benzolkern aufweisen, und welche die folgenden Formeln IV, V oder VI

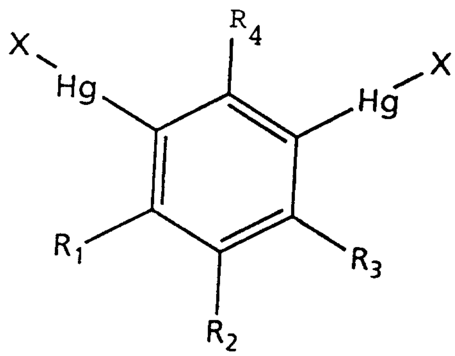

IV

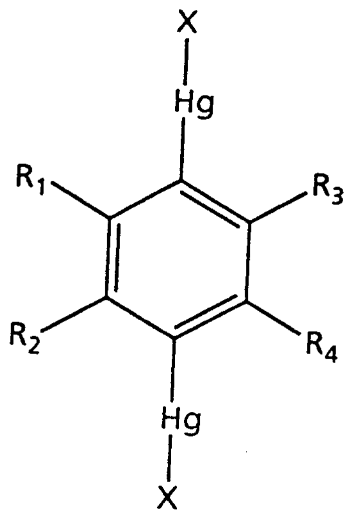

V

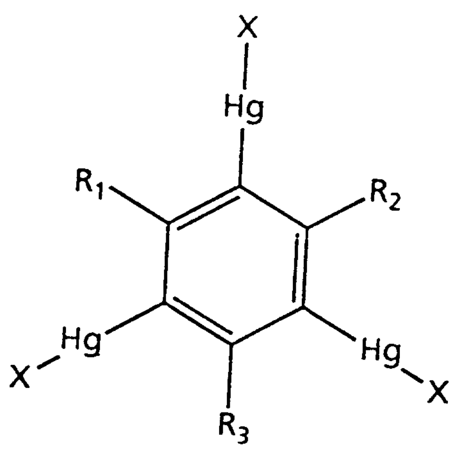

VI

,

besitzen,
wobei in diesen Formeln IV, V und VI sämtliche Gruppen der Formel

X-Hg-

Reste der Struktur

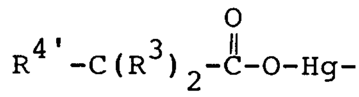

sind, in welchen $R^3$ und $R^{4'}$ die oben angegebenen Bedeutungen besitzen und wobei

die Reste $R_1$, $R_2$, $R_3$ und $R_4$, unabhängig voneinander Wasserstoffatome, aliphatische, cycloaliphatische oder aromatische Reste bedeuten, wobei jedoch mindestens einer der Reste $R_1$, $R_2$, $R_3$ und $R_4$ für einen lipophilen Rest steht, der eine langkettige Alkylgruppe mit 5 - 20 Kohlenstoffatomen oder ein Aryl oder ein Aralkylrest ist, und wobei dieser lipophile Eigenschaften aufweisende Rest direkt oder über eine Aethergruppierung oder eine Estergruppierung oder eine Säureamidgruppierung oder eine Ketogruppe an den Benzolkern gebunden ist,

sowie Halogenkomplexe, beziehungsweise Pseudohalogenkomplexe der aromatischen, pro Molekül 2 oder 3 quecksilberhaltige Reste aufweisenden Verbindungen der angegebenen Struktur.

**11.** Neue Quecksilber enthaltende lipophile Verbindungen, dadurch gekennzeichnet, dass sie die Formel Ia', Ib' oder Ic'

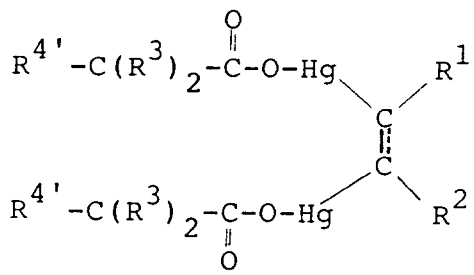

Ia'

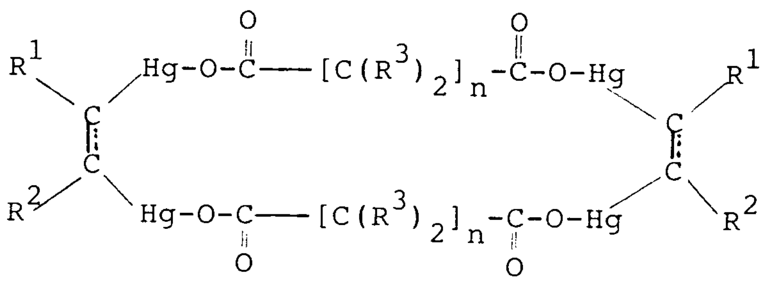

Ib'

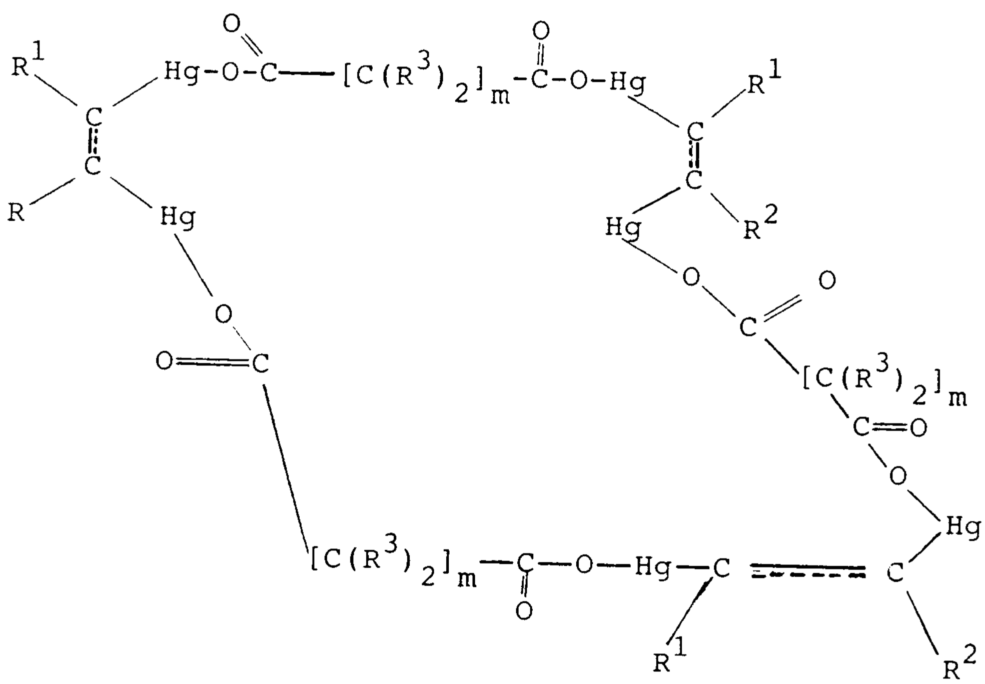

Ic'

aufweisen, wobei in diesen Formeln die Reste $R^1$ und $R^2$ unabhängig voneinander für Alkylreste mit 5 bis 20 Kohlenstoffatomen stehen und

---- anzeigt, dass eine Einfachbindung oder Doppelbindung vorliegt oder

die Gruppierungen der Formel

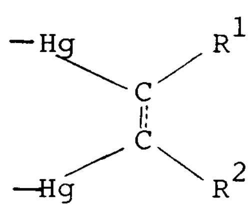

für Gruppen der Formel

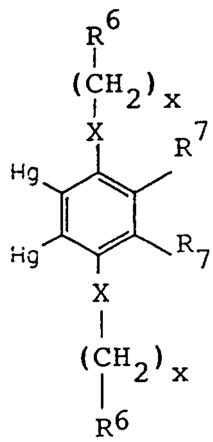

stehen, in welcher -X- unabhängig voneinander eine Einfachbindung oder Gruppen der Formeln

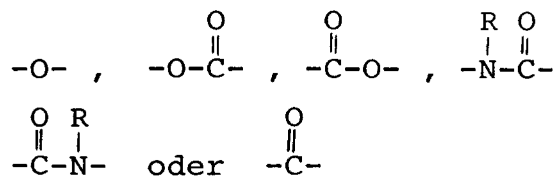

worin R Wasserstoff, Alkyl, Cycloalkyl oder Aryl ist,
darstellen,
die Symbole
x unabhängig voneinander ganze Zahlen im Bereich von 5 bis 20 darstellen,
die Reste $R^6$ unabhängig voneinander Wasserstoffatome, Cycloalkylgruppen oder Arylreste bedeuten und
die Reste $R^7$ unabhängig voneinander Wasserstoffatome, Halogenatome, Alkylgruppen oder Alkoxygruppen bedeuten, wobei die in den Gruppierungen X, beziehungsweise $R^6$ allenfalls vorhandenen Aryl-, beziehungsweise Cycloalkylreste, vorzugsweise Phenylreste, beziehungsweise Cyclohexylreste sind,
$R^3$ unabhängig voneinander für Wasserstoffatome, Fluoratome, Chloratome, Bromatome oder Methylgruppen stehen und
in den Verbindungen der Formel Ia' die beiden Reste
$R^{4'}$ unabhängig voneinandern für Wasserstoffatome, Fluoratome, Chloratome, Alkylreste, Halogenalkylreste, vorzugsweise perhalogenierte Alkylreste, cycloaliphatische Reste, vorzugsweise Cyclohexylreste oder aromatische Reste, vorzugsweise Phenylreste stehen und in den Verbindungen der Formel Ib' die beiden Symbole n jeweils eine ganze Zahl im Bereich von 2 bis 7, vorzugsweise 2 oder 3, darstellen, und
in den Verbindungen der Formel Ic' die Symbole m unabhängig voneinander für eine ganze Zahl im Bereich von 1 bis 7 stehen.

**12.** Vorrichtungen zur Bestimmung von Halogeniden, beziehungsweise Pseudohalogeniden in wasserenthaltenden Medien, dadurch gekennzeichnet, dass sie als Verbindung, die für die Anionen der Halogenide, beziehungsweise Pseudohalogenide selektiv ist, einen Quecksilber enthaltenden Komplexbildner gemäss einem der Patentansprüche 1 - 11 enthält.

**13.** Vorrichtung gemäss Patentanspruch 12, dadurch gekennzeichnet, dass sie zur Bestimmung von Chlorid, Bromid, Iodid, Rhodanid oder Cyanid dient, und dass sie den Quecksilber enthaltenden Komplexbildner in einem oder auf einem Trägermaterial enthält, vorzugsweise eingebettet in ein Polymermaterial, wie zum Beispiel Polyvinylchlorid.

**14.** Vorrichtung gemäss Anspruch 13, dadurch gekennzeichnet, dass sie ausserdem noch einen Weichmacher enthält, vorzugsweise einen Weichmacher auf Basis eines Dicarbonsäurediesters oder eines Tetracarbonsäuretetraesters mit mindestens einer Alkylgruppe mit 5 bis 20 Kohlenstoffatomen, und dass sie gegebenenfalls ausserdem ein quaternäres Ammoniumsalz enthält, in welchem an das Stickstoffatom mindestens eine Alkylgruppe mit 5 bis 20 Kohlenstoffatomen gebunden ist.

Europäisches Patentamt

# EUROPÄISCHER RECHERCHENBERICHT

Nummer der Anmeldung

EP 93 10 2967
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | JOURNAL OF THE AMERICAN CHEMICAL SOCIETY<br>Bd. 109, 1987,<br>Seiten 4714 - 4715<br>WUEST, J.D. ET AL<br>* das ganze Dokument *<br>--- | 1-10 | C07F3/10<br>C07F3/12<br>C07F3/14<br>G01N27/00<br>G01N31/00 |
| X | CHEMICAL ABSTRACTS, vol. 112,<br>1990, Columbus, Ohio, US;<br>abstract no. 179284b,<br>NADEAU, F. ET AL.<br>Seite 796 ;<br>* Zusammenfassung *<br>& ORGANOMETALLICS<br>Bd. 9, Nr. 4, 1990,<br>Seiten 1311 - 1314<br>--- | 1-10 | |
| X | CHEMICAL ABSTRACTS, vol. 109,<br>1988, Columbus, Ohio, US;<br>abstract no. 73557r,<br>WUEST, J.D. ET AL.<br>Seite 705 ;<br>* Zusammenfassung *<br>& STUD. ORG. CHEM. (AMSTERDAM)<br>Bd. 31, 1987,<br>Seiten 501 - 510<br>--- | 1-10 | **RECHERCHIERTE SACHGEBIETE (Int. Cl.5)**<br><br>C07F<br>G01N |
| X | CHEMICAL ABSTRACTS, vol. 87,<br>1977, Columbus, Ohio, US;<br>abstract no. 200955y,<br>DEACON, G.B. ET AL.<br>Seite 678 ;<br>* Zusammenfassung *<br>& AUST. J. CHEM.<br>Bd. 30, Nr. 8, 1977,<br>Seiten 1701 - 1713<br>---<br>-/-- | 1-10 | |

Der vorliegende Recherchenbericht wurde für alle Patentansprüche erstellt

| Recherchenort | Abschlußdatum der Recherche | Prüfer |
|---|---|---|
| DEN HAAG | 24 MAI 1993 | RINKEL L.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)

Europäisches Patentamt

# EUROPÄISCHER RECHERCHENBERICHT

Nummer der Anmeldung

EP 93 10 2967
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CHEMICAL ABSTRACTS, vol. 85, 1976, Columbus, Ohio, US; abstract no. 46115z, YAGUPOL'SKII, L.M. ET AL. Seite 486 ; * Zusammenfassung * & ZH. ORG. KHIM. Bd. 12, Nr. 4, 1976, Seiten 916 - 917 --- | 1-10 | |
| X | CHEMICAL ABSTRACTS, vol. 84, 1976, Columbus, Ohio, US; abstract no. 150721j, DEACON, G.B. ET AL Seite 559 ; * Zusammenfassung * & AUST. J. CHEM.. Bd. 29, Nr. 3, 1976, Seiten 627 - 635 --- | 1-10 | |
| A | WO-A-7 900 661 (SIMON, W.) 6. September 1979 * das ganze Dokument * --- | 1,12-14 | RECHERCHIERTE SACHGEBIETE (Int. Cl.5) |
| A | HELVETICA CHIMICA ACTA Bd. 73, Nr. 5, 1990, Seiten 1481 - 1496 HUSER, M. ET AL. * das ganze Dokument * --- | 1,12-14 | |

-/--

Der vorliegende Recherchenbericht wurde für alle Patentansprüche erstellt

| Recherchenort | Abschlußdatum der Recherche | Prüfer |
|---|---|---|
| DEN HAAG | 24 MAI 1993 | RINKEL L.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)

Europäisches Patentamt

# EUROPÄISCHER RECHERCHENBERICHT

Nummer der Anmeldung

EP 93 10 2967
Seite 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CHEMICAL ABSTRACTS, vol. 117, 1992, Columbus, Ohio, US; abstract no. 22588j, SIMON, W. ET AL. Seite 318 ; * Zusammenfassung * & ASNAL. SCI. Bd. 7, 1991, Seiten 861 - 866<br>----- | 1,12-14 | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 24 MAI 1993 | RINKEL L.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)